**Europäisches Patentamt**

**European Patent Office**

**Office européen des brevets**

(11) Veröffentlichungsnummer: **0 104 465**

**B1**

(12) **EUROPÄISCHE PATENTSCHRIFT**

(45) Veröffentlichungstag der Patentschrift:
05.11.86

(21) Anmeldenummer: 83108487.6

(22) Anmeldetag: **29.08.83**

(51) Int. Cl.⁴: **G 03 B 21/132**

(54) **Overhead-Projektor.**

(30) Priorität: 02.09.82 DE 3232639
28.10.82 DE 3239890
12.11.82 DE 3241956
15.04.83 DE 3313697
15.04.83 DE 3313699
03.05.83 DE 3316032

(43) Veröffentlichungstag der Anmeldung:
04.04.84 Patentblatt 84/14

(45) Bekanntmachung des Hinweises auf die Patenterteilung:
05.11.86 Patentblatt 86/45

(84) Benannte Vertragsstaaten:
AT BE CH FR GB IT LI LU NL SE

(56) Entgegenhaltungen:
DE-B-2 747 916
DE-U-1 951 701
DE-U-8 204 401
FR-A-2 455 756

(73) Patentinhaber: **Demolux GmbH & Co.KG.,**
**Wiesenstrasse 3-5, D-6070 Langen (DE)**

(72) Erfinder: **Grunwald, Peter- Hein, Rheinstrasse 37-39, D-6070 Langen (DE)**

(74) Vertreter: **Junius, Walther, Dr., Wolfstrasse 24, D-3000 Hannover 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Overhead-Projektor, bestehend aus einem Fuß mit einem an diesem befestigten Pfosten für ein Gehäuse, das die Lampe aufnimmt und das Objektiv trägt, sowie aus einem Netzteil und einem Ventilator.

Overhead-Projektoren dieser Art werden von verschiedenen Herstellerfirmen in unterschiedlichen Typen hergestellt. Diese Overhead-Projektoren weisen als Fuß eine Platte auf, auf die die zu projizierende Vorlage gelegt wird. Diese Platte ist die Unterlage für eine verspiegelte Fresnellinse. Werden auf diese transparente Vorlagen gelegt, so werden diese diaskopisch projiziert. Am Rande dieser Platte, im allgemeinen in einer Ecke dieser Platte, ist ein Pfosten mit einem Tragarm befestigt, der ein Gehäuse trägt, welches einerseits die Lichtquelle, bestehend aus Lampe, gewölbtem Spiegel und Kondensor, aufnimmt und gleichzeitig das Objektiv aufnimmt (FR-A-24 55 756).

Bei der Ausführung entsprechend der DE-U- 19 51 701 ist die Lampe im Inneren der Übergangsstelle Pfosten-Tragarm angeordnet. Der Pfosten weist an seinem unteren Ende Lufteinlaßöffnungen und an seinem oberen Ende Luftauslaßöffnungen auf, so daß die Lampe einer wie in einem Kamin aufsteigenden Luftströmung ausgesetzt ist. Diese Lampenanordnung macht jedoch unvorteilhafterweise eine Lichtumlenkung um einen rechten Winkel erforderlich.

Es gibt Ausführungsformen, bei denen ist das Netzteil in einem Kasten auf (DE-B- 27 47 916) oder unterhalb der als Fuß dienenden Platte untergebracht. Das aber ist unvorteilhaft, weil die Dimensionen des Gerätes unnötig groß werden und weil dann ein Ventilator zur Kühlung des Netzteiles und ein anderer Ventilator zur Kühlung der Lampe vorzusehen sind.

Aus diesem Grunde gibt es Ausführungsformen, bei denen das Netzteil ebenfalls in dem Gehäuse untergebracht ist, das die Lichtquelle und das Objektiv aufnimmt. Das aber hat sich als ebenfalls unvorteilhaft erwiesen, weil dadurch das Gewicht des Gehäuses erheblich vergrößert wird und deshalb der Pfosten mit einem evtl. zwischen dem Gehäuse und dem Pfosten angebrachten Ausleger besonders stabil ausgeführt werden muß. In manchen Fällen erfährt dieses Gehäuse eine noch weitere Gewichtserhöhung dadurch, daß neben dem Objektiv für die Overhead-Projektion noch ein weiteres Objektiv für eine Diapositiv-Projektion sowie eine Führungs- und Verschiebevorrichtung für Diapositive in diesem Gehäuse untergebracht sind. Aber nicht nur die stabile Ausführung des Pfostens ist nachteilig, weil sie den Preis und das Gewicht des Overhead-Projektors erhöht, sondern auch die notwendige sehr starre Befestigung des Pfostens an der Fußplatte. Diese Befestigung muß deshalb so fest ausgeführt werden, weil erhebliche Momente, hervorgerufen durch das Gewicht des Gehäuses, die Anordnung dieses Gewichtes seitlich vom Pfosten und den erheblichen Abstand dieses Gewichtes vom Befestigungspunkt, auf die Befestigungsstelle wirken. Im allgemeinen weisen die Pfosten jedoch nicht die gewünschte starre Befestigung auf, sondern neigen zu Schwingungen, was die Projektion undeutlich und unscharf erscheinen läßt.

Das Erfordernis einer sehr starren und starken Befestigung an dieser Übergangsstelle des Pfostens in das Gehäuse hat es mit sich gebracht, daß diese Befestigung immer bisher nur starr ausgeführt wurde.

Es gibt zwar auch klappbare Befestigungen des Pfostens am Gehäuse, aber nur bei Overhead-Projektoren, die die Lichtquelle unterhalb der Schreibplatte aufweisen. Solche diaskopisch arbeitenden Overhead-Projektoren mit klappbarem Pfosten finden als Koffergeräte Verwendung, die sich insbesondere für eine Mitnahme auf eine Reise eignen. Hier ist ein hoher Aufwand zu treiben, wenn der Pfosten schwingungsfrei sein soll.

Auch wird auf Reisen der Betrieb eines Projektors jedoch insofern problematisch, als in verschiednen Ländern verschiedene Netzspannungen üblich sind. Während in Deutschland durchweg 220 Volt Wechselstrom üblich sind, gibt bereits Nordamerika mit 110 Volt Wechselstrom Schwierigkeiten, es gibt auch europäische Länder mit 110 und 130 Volt, in anderen Erdteilen ist auch noch Gleichstrom üblich. Da die üblicherweise käuflichen Projektoren nur für eine einzige Netzspannung und nur für eine einzige Stromart ausgelegt sind, kann es einem Vortragenden passieren, daß er in einem anderen Land seinen mitgebrachten Projektor nicht benutzen kann, weil dort eine andere Stromart oder eine andere Spannung dem elektrischen Netz eigen sind.

Die Erfindung vermeidet diese Nachteile. Es ist die Aufgabe der Erfindung, eine besondere Anordnungsmöglichkeit für die Teile des eingangs genannten Overhead-Projektors zu finden, so daß dieser kleiner, handlicher, leichter und vor allem für seine Verpackung weniger voluminös wird.

Die Erfindung besteht darin, daß der Pfosten in seinem Inneren das Netzteil aufnimmt, daß im Inneren des Pfostens der Ventilator für die Kühlung von Lampe und/oder Netzteil angeordnet ist, und daß zumindest ein Teil des Pfostens durch mindestens einen Lufteinlaß und einen Luftauslaß als Kühlluftkanal ausgebildet ist. Hierdurch wird eine sehr kleine Bauform erreicht. Der Projektor wird handlicher, leichter und weist weniger Volumen auf.

Diese Ausbildung bringt auch den Vorteil mit sich, daß das Gewicht des Overhead-Projektors herabgesetzt wird, weil der sowieso vorhandene hohle Pfosten nunmehr als Kühlluftkanal dient. Die Unterbringung des Netzteiles und des Ventilators in diesem Pfosten bringen den Vorteil mit sich, daß das Gewicht dieser Teile wesentlich günstiger angeordnet ist als in dem das Objektiv und die Lampe aufnehmenden Gehäuse. Denn das Gewicht des Netzteiles befindet sich nun näher an der Befestigungsstelle für den Pfosten am Fuß, so daß die auftretenden Momente nicht mehr so groß sind. Darüber hinaus liegt das Gewicht des Netzteiles jetzt viel günstiger, weil es vertikal über der Befestigungsstelle oder nahezu vertikal über der Befestigungsstelle liegt. Ein weiterer Vorteil liegt in der thermisch günstigeren Anordnung des Netzteiles, welches nun nicht mehr von der von der Lampe abgestrahlten Wärme in Mitleidenschaft gezogen wird.

Bei dieser Ausführungsform ist es vorteilhaft, wenn das Netzanschlußkabel aus dem unteren Bereich des Pfostens herausgeführt ist, so daß das Netzanschlußkabel gar nicht mehr in den Fuß überzugehen braucht.

Wegen dieser sehr viel günstigeren Anordnung des Netzteiles im Pfosten ist es möglich, daß der Pfosten mit dem Fuß durch eine Steckverbindungsvorrichtung verbunden ist. Das bringt den Vorteil mit sich, daß der Pfosten für einen Transport des Overhead-Projektors in einfacher Weise abgenommen werden kann und in einfacherer und viel besserer Weise verpackt werden kann. Dabei ist die Steckverbindungsvorrichtung höchst einfach ausführbar, da sie nur eine mechanische Verbindung und keinerlei elektrische Verbindungteile benötigt.

Vorteilhaft ist es, wenn der Transformator des Netzteiles ein elektronischer Transformator ist, da diese Transformatoren besonders leicht und klein sind.

Weitere Möglichkeiten bestehen darin, daß der Fuß in einen Schreibtisch oder einen sonstigen Arbeitstisch eingearbeitet ist.

Für die Reise ist es zweckmäßig, wenn an dem Fuß Befestigungsvorrichtungen für den Pfosten angebracht sind, so daß während des Transportes alle Teile des Overhead-Projektors aneinander befestigt sind und ein einheitliches Ganzes bilden. Diese Befestigungsvorrichtungen können Magnete sein, mit denen der Pfosten während des Transportes am Fuß befestigt ist.

Besonders vorteilhaft ist es, wenn der Pfosten aus zwei unter einem stumpfen Winkel ineinander übergehenden Teilen besteht, von denen der untere das Netzteil und der obere die Lampe aufnimmt, wobei das freie Ende des oberen Teiles die Objektivhalterung trägt.

Als besonders vorteilhaft hat es sich herausgestellt, daß der Pfosten aus drei unter stumpfen Winkeln ineinander übergehenden Teilen besteht, von denen der untere das Netzteil, der mittlere den Ventilator und der obere, der an seinem freien Ende die Objektivhalterung trägt, die Lampe aufnimmt. Hierdurch wird eine besonders günstige Aufteilung der Gewichte der einzelnen Teile erreicht, gleichzeitig aber auch eine besonders günstige und zweckmäßige Kühlung der einzelnen Teile. Dann die durch das Netzteil strömende Luft verläuft über einen anderen Zweig als die die Lampe kühlende Luft, beide Zweige werden aber von ein und demselben Ventilator in Strömung gehalten.

Bei dieser Ausführungsform ist es zweckmäßig, wenn der Luftauslaß an der Außenseite des mittleren Pfostenteiles angeordnet ist.

Um den Overhead-Projektor für eine möglichst universelle Einsatzmöglichkeit zu gestalten, ist es zweckmäßig, wenn der im wesentlichen vertikal verlaufende Teil des Pfostens teleskopierbar ist und mit einer die Pfostenlänge einstellenden Vorrichtung versehen ist. Dann ist es nämlich möglich, im Physikunterricht beispielsweise sowohl einzelne auf dem Tisch liegende Blätter wie auch aus einem auf dem Tisch liegenden dicken Buch und ebenso physikalische Versuche mit Gerätschaften, die sich in einer Ebene oberhalb der Tischebene befinden, gleich gut zu projizieren.

Um den in dieser Weise aufgebauten Projektor jeder üblichen Netzspannung anzupassen, ist es zweckmäßig, wenn zumindest die Eingangsstufe des Netzgerätes als austauschbares Bauteil ausgebildet ist.

Hierdurch wird die Möglichkeit geschaffen, durch einfaches Austauschen eines Bauteiles den Projektor der jeweiligen Netzspannung anzupassen. Dieser Austausch wird am besten durch Stecken bewerkstelligt: Herrscht in dem Land, in dem der Projektor betrieben werden soll, eine andere Netzspannung als die vorgesehene, wird einfach die Eingangsstufe aus dem Projektor herausgezogen und gegen eine andere Eingangsstufe ausgetauscht, welche der Landesnetzspannung angepaßt ist. Das ist eine sehr einfache Maßnahme, die von jedermann ohne Schwierigkeiten ausgeführt werden kann.

Hierbei ist es zweckmäßig, wenn die Eingangsstufe des Netzgerätes als steckbares Bauteil ausgebildet ist und einen Stecker aufweist, der in eine Fassung an dem Netzgerät einsteckbar ist, insbesondere wenn die Eingangsstufe des Netzgerätes in einem gesonderten Gehäuse untergebracht ist, welches kleiner als das Gehäuse des Netzgerätes bzw. des Projektors ist.

Vorteilhaft ist es, wenn das Gehäuse der Eingangsstufe des Netzgerätes die Form eines Zylinders oder eines Quaders aufweist, weil eine derartige Gehäuseform leicht anzufassen und leicht zu handhaben ist. Das Gehäuse selbst gibt dem Benutzer einen Schutz vor der Berührung von solchen Teilen, die beim Einstecken der Eingangsstufe des Netzgerätes Spannung führen. Dabei ist es zweckmäßig, wenn das Gehäuse des Projektors eine Öffnung für das Einstecken des Gehäuses der Eingangsstufe aufweist und wenn das Gehäuse der Eingagsstufe aus dem Gehäuse des Projektors ein Stück heraussteht. Dann nämlich kann das herausstehende Stück des Gehäuses der Eingangsstufe mit den Fingern einer Hand angefaßt werden und aus dem Gehäuse des Projektors herausgezogen werden ausgetauscht werden und gegen ein gleichgeformtes Gehäuse mit einer anderen Eingangsstufe für eine andere Spannung oder Stromart ersetzt werden. Für dieses leichte Handhaben des Gehäuses der Eingangsstufe ist es zweckmäßig, wenn die dem Stecker abgewandte Seite des Gehäuses der Eingangsstufe als Handgriff ausgebildet ist.

Diese Eingangsstufe kann mit einem Stecker mit verschiedenen Kontakten versehen sein, die untereinander derart verdrahtet sind, daß einige Steckstifte oder Kontakte blind angeordnet sind, während ein oder mehrere ganz bestimmte Steckerstifte oder Kontakte miteinander verbunden sind, um die Netzspannung nur in ganz bestimmte Steckerstifte oder Kontakte zu leiten, über die dann diese Spannung in bestimmte Teile der nachgeschalteten Stufen bzw. in bestimmte nachgeschaltete Stufen des Netzgerätes fließt. Zweckmäßigerweise wird man aber die steckbare Eingangsstufe gleich so gestalten, daß in ihr elektronische Bauteile angeordnet sind, die der Spannungswandlung dienen. Hierbei ist es zweckmäßig, wenn in dem Gehäuse der Eingangsstufe mindestens ein Widerstand angeordnet ist. Vorteilhaft ist es auch, wenn in dem Gehäuse der Eingangsstufe eine Sicherung angebracht ist. Diese ist dann leicht auswechselbar, wenn das Gehäuse der Eingangsstufe aus dem Projektor herausgezogen ist.

Für eine Anzeige, ob die richtige Eingangsstufe eingesetzt ist, kann es zweckmäßig sein, wenn in dem Gehäuse der Eingangsstufe eine Lampe untergebracht ist und wenn die dem Stecker abgewandte Seite des Gehäuses, also diejenige Seite, die meistens als Handgriff benutzt wird, lichtdurchlässig ist. Es lassen sich verschiedene elektrische Schaltungen konstruieren, die die Lampen aufleuchten lassen, wenn entweder die richtige Eingangsstufe gewählt ist oder wenn eine für die Netzspannung verkehrte Eingangsstufe eingesteckt ist. In dem Falle, in welchem die Lampe aufleuchten soll, wenn die richtige Eingangsstufe für die Netzspannung eingesteckt ist, wird man den lichtdurchlässigen Teil des Gehäuses beispielsweise aus einem grüngefärbten lichtdurchlässigen Baustoff herstellen und die Lampe als Betriebsbereitschaftslampe benutzen. Soll hingegen angezeigt werden, daß nicht die richtige Eingangsstufe gewählt ist, so wird man das lichtdurchlässige Material beispielsweise rot färben und die der Lampe vorgeschaltete Schaltanordnung so ausbilden, daß die Lampe immer dann aufleuchtet, wenn die Spannung zu hoch oder zu niedrig für den Betrieb des elektronischen Netzgerätes ist. - Es besteht auch die Möglichkeit, zwei Lampen vorzusehen und das Material des Gehäuses vor diesen Lampen unterschiedlich zu färben, beispielsweise rot und grün. Dann wäre aus der aufleuchtenden Farbe ersichtlich, daß überhaupt Spannung im Netz vorhanden ist und welche Spannung vorhanden ist, nämlich eine für den Betrieb des Netzgerätes geeignete oder eine für den Betrieb des Netzgerätes ungeeignete Spannung.

Vorteilhaft ist es, wenn der Pfosten bzw. Tragarm geteilt ist, wenn seine Teile durch eine Steckverbindung miteinander verbunden sind und wenn in die eine Stirnseite dieser Teile die Eingangsstufe eingesteckt ist. Dabei kann es zweckmäßig sein, wenn der die Eingangsstufe aufnehmende Teil des Tragarmes ein Fenster aufweist, durch welches die Eingangsstufe oder ihr Gehäuse zu sehen ist, um hier entweder eine aufgebrachte Beschriftung mit der Spannungsangabe oder eine Lampe sichtbar zu machen.

Bei der Projektion kommt es hin und wieder vor, daß die Lampe des Projektors ausfällt und durch eine neue ersetzt werden muß. Ist mit dem Projektor schon längere Zeit hintereinander projiziert worden, so ist die Lampe sehr heiß und kann nur mit Hilfsmitteln gewechselt werden. Eine Vielzahl solcher Hilfsmittel sind bekannt, angefangen von einem Tuch, mit dem man die Lampe anfaßt, bis zu Auswerfvorrichtungen, mit denen die heiße Lampe ausgeworfen wird, die dann in das Gehäuse des Projektors hineinfällt und die man dort solange liegenläßt, bis sie abgekühlt ist. Alle diese Hilfsmittel sind letztlich unbefriedigend.

Um diese Nachteile zu vermeiden, ist es zweckmäßig, wenn die Lampe mit ihrer Fassung in einem Rahmen untergebracht ist, der in innerhalb des Gehäuses angeordneten Führungsschienen durch eine Öffnung des Gehäuses ein- und ausschiebbar ist und der elektrische Kontakte trägt, welche im eingeschobenen Zustand des Rahmens mit im Inneren des Gehäuses angeordneten Gegenkontakten in Berührung sind.

Bei diesem Projektor wird der Rahmen mitsamt Lampe aus der Öffnung des Gehäuses herausgezogen und gegen einen anderen Rahmen ausgetauscht. Ist die Lampe erkaltet, kann sie aus ihrem Sockel im Rahmen herausgenommen werden und durch eine neue Lampe ersetzt werden. Dadurch ist erreicht, daß mit nur zwei Handgriffen das Auswechseln einer heißen, defekten Lampe gegen eine neue Lampe erfolgen kann. Dieses Auswechseln geschieht völlig gefahrlos, der Bedienende kann sich hieran nicht Brandwunden zuziehen. Denn zweckmäßigerweise ist der eine Holm des Rahmens als Handhabe oder als Handgriff ausgebildet oder trägt einen solchen. Durch das Herausnehmen des Rahmens mit der defekten heißen Lampe ist erreicht, daß diese sich nicht mehr im Inneren des Projektorgehäuses befindet.

Vorteilhaft ist es, wenn der dem Handgriff bzw. der Handhabe abgewandte Holm Kontaktstifte trägt. Eine andere Möglichkeit des elektrischen Anschlusses besteht darin, daß mindestens einer der Holme des Rahmens Flächen oder Flächenteile aus leitfähigem Material als Kontaktflächen trägt.

Insbesondere in dem letztgenannten Fall kann es zweckmäßig sein, wenn die Führungsschienen für den Rahmen im Inneren des Gehäuses der Lichtquelle leitfähig sind und Gegenkontakte bilden, über die der für den Betrieb der Lampe notwendige Strom auf die Kontaktflächen an den Holmen des Rahmens übertragen wird.

Vorteilhaft ist es, wenn im Rahmen neben der Lampe der Reflektor angeordnet ist. Dann wird nicht nur die Lampe getauscht, sondern gleichzeitig auch der Reflektor.

Besonders vorteilhaft ist es, wenn Arbeitsmittel zur Verstellung der gegenseitigen Lage von Lampe und Reflektor im Rahmen vorgesehen sind. Dann kann die Einstellung der gegenseitigen Lage von Lampe und Reflektor außerhalb des Projektors vorgenommen werden, beispielsweise bereits in der Fabrik vorgenommen werden. Denn ein derartiger Rahmen ist ein sehr billiges Bauteil, der bei Verwendung eines billig herstellbaren Reflektors als Einheit in den Ersatzteilhandel gebracht werden kann.

Die Erfindung bietet eine weitere sehr vorteilhafte Möglichkeit des Lampenwechsels dadurch, daß im Rahmen zwei Lampen nebeneinander im Rahmenfenster oder hintereinander im Rahmenfenster angeordnet sind. Der Lampenwechsel erfolgt dann dadurch, daß der Rahmen aus dem Projektorgehäuse herausgezogen wird, um 180° gedreht wird und wieder in den Projektor eingeschoben wird. Die Anordnung der beiden Lampen nebeneinander führt zu einem zwar breiten, aber dünnen Rahmen, während die Anordnung der beiden Lampen hintereinander im Fenster des Rahmens zu einem kompakteren, aber auch dickeren Rahmen führt.

Je nach den räumlichen Gegebenheiten im Projektor lassen sich beide Möglichkeiten gleich gut anwenden.

Zweckmäßig ist es auch hier, wenn im Rahmen die Reflektoren für die beiden Lampen mit angeordnet sind. Im Falle der beiden nebeneinander im Fenster angeordneten Lampen ist dann auf jeder Seite des Rahmens einmal die Rückseite eines Reflektors und daneben eine Lampe zu sehen. Im Falle der im Fenster des Rahmens hintereinander angeordneten Lampen liegen die Reflektoren zwischen den beiden Lampen. Hierbei kann es zweckmäßig sein, wenn die beiden Reflektoren an zwei gegenüberliegenden Seiten eines Körpers ausgebildet sind. Dieser Körper liegt zwischen den beiden Lampen. Vorteilhaft kann es sein, wenn der Rahmen und der Körper mit den beiden Reflektoren einstückig hergestellt sind. Vorteilhaft ist es, wenn der Handgriff oder die Handhabe wärmeisoliert am Rahmen angebracht sind.

Sind zwei Lampen in einem Rahmen angebracht, ist es zweckmäßig, wenn die elektrischen Gegenkontakte unsymmetrisch zu den Verlängerungen der geometrischen Achsen oder Mittelebenen angeordnet sind, damit immer nur eine Lampe im Projektor in Tätigkeit ist, während die andere als Ersatzlampe bereitsteht.

Die Unterbringung des Netzgerätes im Posten und die baukastenartige Anbringung des Projektionskopfes am Pfosten ermöglichen es, einen Projektor zu entwickeln, der zu einem Universalgerät ausbaubar ist, mit dem nicht nur Overhead-Projektionsvorlagen und Diapositive, sondern auch Mikrofilme projiziert werden können und der weiter dahingehend ausbaubar ist, daß während der Projektion an die Wand auch Diapositive und Mikrofilme gleichzeitig auf einer Tischplatte gelesen werden können, so daß der Vortragende auch bei der Projektion von Diapositiven und Mikrofilmen nicht seinen Kopf zwischen der Zuhörerschaft und dem projizierten Bild zu wenden hat.

Die Erfindung besteht darin, daß die Teile des Projektors baukastenartig zusammenbaubar sind, indem der Pfosten an die Grundplatte oder an ein unter der Grundplatte angeordnetes Gehäuse und der Projektionskopf an den Pfosten mittels einer Schnellkupplung oder Steckverbindung anbaubar sind.

Die eine Möglichkeit der Ausführung der Erfindung besteht darin, daß der am Pfosten mittels einer Steckverbindung oder einer Schnellkupplung angebaute oder anbaubare Projektionskopf mit Overheadprojektionsobjektiv gegen einen anderen mit Mikrofilmprojektor oder Diaprojektor austauschbar ist. Eine andere Möglichkeit besteht darin, daß am Projektionskopf mit Overheadprojektionsobjektiv zusätzlich ein Projektionskopf mit Mikrofilmprojektor und/oder Diaprojektor mittels einer Steckverbindung oder einer Schnellkupplung anbaubar ist.

Hierdurch wird es möglich, mit ein und demselben Gerät alle drei Arten von Vorlagen (Overhead-Folie, Diapositiv, Mikrofilm) zu projizieren. Hierdurch ist erreicht, daß nicht nur eine sehr preiswerte Projektionsmöglichkeit für diese drei Bildarten gegeben ist, sondern daß auch der Platzaufwand erheblich verringert ist, den der Vortragende benötigt. Durch die Gestaltung dieses Gerätes in Baukastenform wird es dem Benutzer möglich, sich die einzelnen Teile nach und nach anzuschaffen.

Von besonderem Vorteil ist es, wenn in dem Projektionskopf ein Mikrofilmprojektor untergebracht ist, dessen Strahlengang einerseits auf die Grundplatte, andererseits auf die Wandfläche richtbar ist. Hierdurch wird erreicht, daß der Stehbildwerfer gleichzeitig Mikrofilmlesegerät ist, welches darüber hinaus den Vorteil hat, daß auf ein weißes Blatt Papier projiziert werden kann, auf dem während der Projektion des Mikrofilmes gleichzeitig geschrieben werden kann. Hier wird dem Mikrofilmleser die Möglichkeit gegeben, auf dem weißen Papier vom Mikrofilm abzuzeichnen. Dieses ist ein Vorteil, der sich allgemein aus dieser Anordnung des Mikrofilmprojektors im Projektionskopf ergibt und nicht abhängig ist von dem Baukastensystem. Dieser Vorteil tritt gleichermaßen auf, ob nun der Mikrofilmprojektor in einem fest am Pfosten befestigten Projektionskopf oder einem austauschbar am Pfosten befestigten Projektionskopf untergebracht ist.

Ein ganz ähnlicher Vorteil ist erreicht, wenn der Strahlengang des Diaprojektors einerseits auf die Grundplatte, andererseits auf eine Wandfläche richtbar ist. Auch hier kann der Diaprojektor als Betrachtungsgerät genutzt werden, und es ist bei diesem Betrachtungsgerät im Gegensatz zum Stand der Technik dem Betrachter möglich, auf einem Blatt Papier oder auf einer Folie oder sonstigen Gegenständen zu zeichnen, so daß es möglich ist, die projizierten Bilder auf die Gegenstände abzuzeichnen. Auch dieser Vorteil hängt nicht ab von der baukastenartigen Zusammenbaubarkeit, sondern ist ebenso wie bei der Nutzung des Stehbildwerfers als Mikrofilmlesegerät unabhängig davon, ob nun der Projektionskopf fest am Pfosten angebracht ist oder austauschbar am Pfosten angebracht ist.

Besondere Vorteile ergeben sich für den Mikrofilmprojektor und den Diaprojektor, deren Strahlengänge einerseits auf die Grundplatte, andererseits auf eine Wandfläche richtbar sind, dann, wenn der Strahlengang sowohl auf die Grundplatte als auch auf die Wandfläche gleichzeitig gerichtet wird. Dann nämlich ist das projizierte Bild des Mikrofilmes oder des Diapositives für den Vortragenden auf der Grundplatte des Stehbildwerfers zu einer Zeit sichtbar, zu der alle seine Zuhörer dieses Bild an der Wand sehen. Der vor der Zuhörerschaft sitzende Vortragende braucht bei seinem Vortrag dann nicht den Kopf zwischen dem an die Wand projizierten Bild und der Zuhörerschaft zu wenden, er braucht nur seine Blickrichtung um einen geringen Winkel zu verstellen, wenn er einmal das projizierte Bild, das andere Mal die Zuhörerschaft sehen will. Zur Ausführung dieser gleichzeitigen Projektion ist es zweckmäßig, wenn im Strahlengang des Mikrofilmprojektors und/oder des Diaprojektors ein klappbarer Spiegel, ein in den Strahlengang einschiebbarer Spiegel, ein teilweise durchlässiger Spiegel oder ein den Strahlengang verzweigender, teilweise verspiegelter prismatischer Körper angeordnet ist. Durch den Spiegel oder den teilweise verspiegelten, prismatischen Körper, der den Strahlengang verzweigt, wird es möglich, das zu projizierende Bild sowohl auf der Grundplatte als auch an der Wand zu projizieren. Ist der Spiegel klappbar oder in den Strahlengang einschiebbar, kann das Bild entweder auf die Grundplatte oder an die Wand projiziert werden, wie das ebenfalls dann möglich ist, wenn der Mikrofilmprojektor oder der Dia-Projektor mittels einer Verschwenkvorrichtung am Projektionskopf am Pfosten angebracht sind.

Baulich ist es vorteilhaft, wenn der Mikrofilm-Projektor, der Dia-Projektor und das Overhead-Projektionsobjektiv in gesonderten Projektionsköpfen untergebracht sind, welche gleiche Schnellkupplungsteile oder Steckverbindungsteile aufweisen.

Besondere Möglichkeiten ergeben sich dadurch, daß am Mikrofilm-Projektorkopf, am Diaprojektorkopf und/oder am Overhead-Projektionskopf zusätzlich jenes Schnellkupplungsteil angebracht ist, welches auch am Pfosten angebracht ist. Dann kann beispielsweise am Pfosten der Overhead-Projektionskopf und zusätzlich der Mikrofilm-Projektorkopf angebracht werden. Es wird dadurch möglich, das Bild des Mikrofilmes auf der Grundplatte abzubilden und über den Overhead-Projektionskopf an die Wand zu projizieren. Dann ist einem Vortragenden die Möglichkeit gegeben, in das Bild des Mikrofilmes hineinzuzeichnen und zu schreiben, wobei diese Zeichnung und Schrift an der Wandfläche projiziert erscheinen, wobei die Zuhörer und Zuschauer die Entstehung der Zeichnung und der Schrift verfolgen können. Gleiches ergibt sich für die Projektion eines Diapositives, wenn am Pfosten der Diaprojektorkopf und der Overhead-Projektorkopf gleichzeitig angebracht sind.

Der Gegenstand der Erfindung läßt sich weiter dadurch ausbilden, daß ein Diaprojektor vorgesehen ist, dessen Gehäuse sich auf der Grundplatte oder - die Grundplatte überfassend - auf der Aufstellfläche abstützt und mittels elektrischer Kontaktstifte in Öffnungen des Tragarmes eingesteckt ist, hinter denen sich Kontaktklemmen befinden.

Dieser Projektor ist für das Verstauen in die Grundplatte, den Tragarm, den Projektionskopf und den Diaprojektor leicht zerlegbar und alle diese Teile sind leicht in einer Tasche oder einem kleinen Koffer verstaubar. Der besondere Vorteil dieses Projektors ist es, daß der Overhead-Projektionskopf und der Diaprojektor aus ein und demselben Netzgerät gespeist werden, welches im Tragarm untergebracht ist.

Da für die Kühlung der Lichtquelle des Overhead-Projektionskopfes als auch für die Kühlung der Lichtquelle des Diaprojektors Gebläse mit Niedervolt-Motoren verwendet werden, befindet sich Netzspannung lediglich im Tragarm, während alle Kontaktstifte, die in den Tragarm hineingesteckt werden - seien es die Kontaktstifte des Projektionskopfes oder seien es die Kontaktstifte des Diaprojektors- nur Niederspannung führen. Ein weiterer Vorteil dieses Projektors ist es, daß er sich in sehr kleinen Dimensionen herstellen läßt, insbesondere für ein Schreibplattenformat von 15 cm x 15 cm oder 10 cm x 10 cm. Verständlicherweise müssen für diese Miniaturisierung der Schreibfläche auch alle anderen Bauteile miniaturisiert, d.h. sehr viel kleiner als sonst üblich, ausgeführt werden. Daher ist es zweckmäßig, wenn in den Lichtquellen für die Overhead-Projektion und/oder für die Diaprojektion Gleichstrommotore zum Einsatz kommen.

Für die Anordnung des Diaprojektors ist es zweckmäßig, wenn die Grundplatte über die Schreibfläche hinaus als Auflagefläche für den Diaprojektor verlängert ist.

Vorteilhaft ist es, wenn der Tragarm über seinem unteren Ende Kontaktöffnungen für die Kontaktstifte des Diaprojektors, vor seinem oberen Ende oder am oberen Ende Kontaktöffnungen für die Kontaktstifte des Projektionskopfes aufweist.

Dabei ist es vorteilhaft, wenn der Abstand der Kontaktöffnungen für Diaprojektor und Projektionskopf unterschiedlich sind, weil dann Laien, ja selbst Kinder, den Projektionskopf oder den Diaprojektor nicht an der falschen Stelle am Tragarm durch Anstecken befestigen können.

Für die Anbringung des Overhead-Projektionskopfes gibt es drei bevorzugte Möglichkeiten: Entweder wird dieser Projektionskopf seitlich am Tragarm angesteckt, wobei es zweckmäßig ist, wenn der Tragarm unterhalb der oberen Kontaktlöcher einen Vorsprung aufweist und der Projektionskopf dieser Form angepaßt ist, damit er sich besser am Tragarm abstützen kann, oder wenn der Projektionskopf mit im wesentlich vertikal stehenden, nach unten gerichteten Kontaktstiften an das obere Ende des Tragarmes von oben her ansteckbar ist oder wenn die Kontaktstifte am Projektionskopf schräg nach unten weisend angeordnet sind.

Die Anordnung des Netzgerätes in dem Pfosten sowie die Möglichkeit, den Pfosten auf den Fuß zu stecken, eröffnet die Möglichkeit, einen insbesondere für Konferenzen benutzbaren Arbeitstisch zu schaffen, an dem jeder, der am Tisch sitzt, einen Overhead-Projektor benutzen kann, ohne daß dieser Overhead-Projektor viel Raum einnimmt und die Sicht und die Arbeitsfläche verstellt.

Dieses wird dadurch erreicht, daß in der Tischplatte mindestens eine Halterung eingelassen ist, in die Pfosten für Overhead-Projektorobjektive und zu diesen gehörige Umlenkspiegel einsteckbar sind.

Hierdurch wird eine Bauform für den Arbeitstisch geschaffen, bei der lediglich Pfosten von Overhead-Projektoren in Halterungen eingesteckt werden, die in die Tischplatte eingelassen sind. Der Pfosten eines Overhead-Projektors nimmt nur sehr wenig Raum ein. Er verstellt auch kaum die Sicht. Er nimmt auch nur sehr wenig Arbeitsfläche auf dem Tisch weg. Da die Halterungen für die Pfosten neben jedem Arbeitsplatz vorgesehen werden können, ist es jedem Konferenzteilnehmer am Arbeitstisch ermöglicht, neben seinem Arbeitsplatz einen Overhead-Projektor zu haben und mit diesem seine zeichnerischen Darstellungen allen Konferenzteilnehmern vorzuführen. Es besteht aber auch die Möglichkeit, daß zwischen je zwei Arbeitsplätzen am Tisch eine Halterung für den Pfosten eines Overhead-Projektorobjektivs angeordnet ist. Bei dieser Anordnung arbeiten zwei Konferenzteilnehmer mit einem Overhead-Projektor.

Da die Pfosten für die Overhead-Projektorobjektive in die in die Tischplatte eingelassenen Halterungen einsteckbar sind und auch wieder herausnehmbar sind, kann jeder Konferenztisch an die Anzahl der Konferenzteilnehmer angepaßt werden. Es sind dann niemals mehr Overhead-Projektoren als Konferenzteilnehmer am Arbeitstisch angeordnet.

Vorteilhaft ist es, wenn in der Halterung und in dem in diese einzusteckenden Teil des Pfostens elektrische Anschlußkontakte angeordnet sind. Dann gibt es eine Verkabelung der einzelnen Anschlüsse für die Lichtquellen der Overhead-Projektoren lediglich unter dem Konferenztisch und nicht auf dem Konferenztisch, wie das der Fall ist, wenn man herkömmliche Overhead-Projektoren auf einem Konferenztisch benutzt.

Vorteilhaft ist es, wenn in der Oberfläche der Tischplatte neben den Halterungen Vertiefungen für die Aufnahme von verspiegelten Fresnellinsen angebracht sind. Dann lassen sich nämlich diese Presnellinsen in einer mit der Tischplattenoberfläche gleichen Ebene anordnen, so daß die Arbeit des Konferenzteilnehmers am Overhead-Projektor immer nur in einer Ebene, nämlich der Ebene der Tischoberfläche, erfolgt.

Wenn die Rückseite der verspiegelten Fresnellinse aus dem Material der Tischplattenoberfläche besteht, besteht hier die Möglichkeit, an denjenigen Arbeitsplätzen des Konferenztisches, an denen ein Ständer für Overhead-Projektorobjektive eingesteckt ist, die verspiegelte Fresnellinse in der Tischplattenoberfläche zu haben, während an anderen Arbeitsplätzen, an denen kein Ständer für Overhead-Projektive eingesteckt ist, die Platte mit der verspiegelten Fresnellinse umgedreht wird, so daß nun das Material der Tischplattenoberfläche an der Rückseite dieser Platte nach oben gekehrt ist.

Vorteilhaft ist es, wenn die Lichtquelle sowohl auf die verspiegelte Fresnellinse als auch auf die Tischoberfläche neben der verspiegelten Fresnellinse gerichtet ist. Damit dient nämlich die Lichtquelle nicht nur für die Overhead-Projektion, sondern ist auch gleichzeitig Arbeitsplatz-Beleuchtung.

Bei Konferenzen ist es üblich, daß die Konferenzteilnehmer zumindest teilweise einander gegenübersitzen. In diesem Falle ist es zweckmäßig, wenn jeder Pfosten zwei Objektive und zwei Umlenkspiegel trägt, die in andere oder entgegengesetzte Richtungen gerichtet sind. Auf diese Weise wird erreicht, daß mit einem Overhead-Projektor in zwei Richtungen projiziert wird, nämlich z.B. an zwei gegenüberliegende Wände des Konferenzraumes. Das hat den Vorteil, daß, wenn die Konferenzteilnehmer sich in zwei Reihen gegenüber sitzen, die Teilnehmer in jeder Reihe gleich gut das projizierte Bild sehen können, ohne daß sie auch nur ihren Kopf zu drehen brauchen.

Das Wesen der Erfindung ist nachstehend anhand eines in der Zeichnung schematisch dargestellten Ausführungsbeispieles näher erläutert. Es zeigen:

Fig. 1 eine perspektivische Ansicht des Projektors von hinten,

Fig. 2 eine Seitenansicht der Schreibplatte des Projektors nach Abnahme des Pfostens,

Fig. 3 einen Schnitt durch den Pfosten,

Fig. 4 eine Ansicht des für den Transport zusammengelegten Overhead-Projektors der Fig. 1-3,

Fig. 5 eine andere Ausführungsform eines Overhead-Projektors mit einer Schreibplatte, die gleichzeitig Transportkoffer ist, in aufgestelltem Zustand in Seitenansicht,

Fig. 6 in eingepackten Zustand

Fig. 7 in verschlossenem Zustand,

Fig. 8 die Teile eines zusammensteckbaren Overhead- Projektors, bei dem die Eingangsstufe in den einen Teil des Tragammes eingesteckt wird,

Fig. 9 den Overhead-Projektor in zusammengebautem Zustand,

Fig. 10 eine Ansicht eines Overhead-Projektors, in dessen Tragarm die Eingangsstufe von außen eingesteckt wird, in Frontansicht,

Fig. 11 in Seitenansicht,

Fig. 12 in vergrößerter Darstellung die einzusteckende Eingangsstufe,

Fig. 13 eine Seitenansicht eines Projektors mit einsteckbarer Lampe,

Fig. 14 eine Ansicht des die Lampe tragenden Rahmens,

Fig. 15 einen Längsschnitt durch den Rahmen,

Fig. 16 einen Schnitt durch eine andere Ausführungsform des Rahmens mit Kontaktflächen an den Seiten und einem Reflektor im Längsschnitt,

Fig. 17 einen Rahmen in Führungsschienen,

Fig. 18 eine Ansicht einer Ausführungsform eines Rahmens für zwei Lampen in Nebeneinanderanordnung,

Fig. 19 eine Ansicht einer anderen Ausführungsform eines Rahmens für zwei Lampen mit zwei Reflektoren in Nebeneinanderanordnung,

Fig. 20 einen Querschnitt durch den Gegenstand der Fig. 19,

Fig. 21 einen Längsschnitt durch einen Rahmen für zwei Lampen in Hintereinanderanordnung,

Fig. 22 eine Ansicht des mit einem Mikrofilm-Projektorkopf versehenen Stehbildwerfers,

Fig. 23 eine Ansicht des mit einem Overhead-Projektionskopf versehenen Stehbildwerfers,

Fig. 24 eine Ansicht des sowohl mit Mikrofilm-Projektorkopf als auch mit Overhead-Projektorkopf versehenen Stehbildwerfers,

Fig. 25 eine Ansicht des mit einem Dia-Projektorkopf versehenen Stehbildwerfers,

Fig. 26 eine Ansicht des mit Dia-Projektorkopf und Overhead-Projektorkopf versehenen Stehbildwerfers,

Fig. 27 eine Frontansicht eines Overhead-Projektors mit seitlich am Tragarm angestecktem Diaprojektor,

Fig. 28 eine Seitenansicht des Projektors der Fig. 27,

Fig. 29 eine Ansicht des Konferenztisches von der Seite,

Fig. 30 eine Ansicht auf den Konferenztisch, bei dem jeder Arbeitsplatz mit einem Overhead-Projektor ausgestattet ist, von oben,

Fig. 31 eine Seitenansicht des Ständers mit Lichtquelle und zwei Objektiven, teilweise geschnitten.

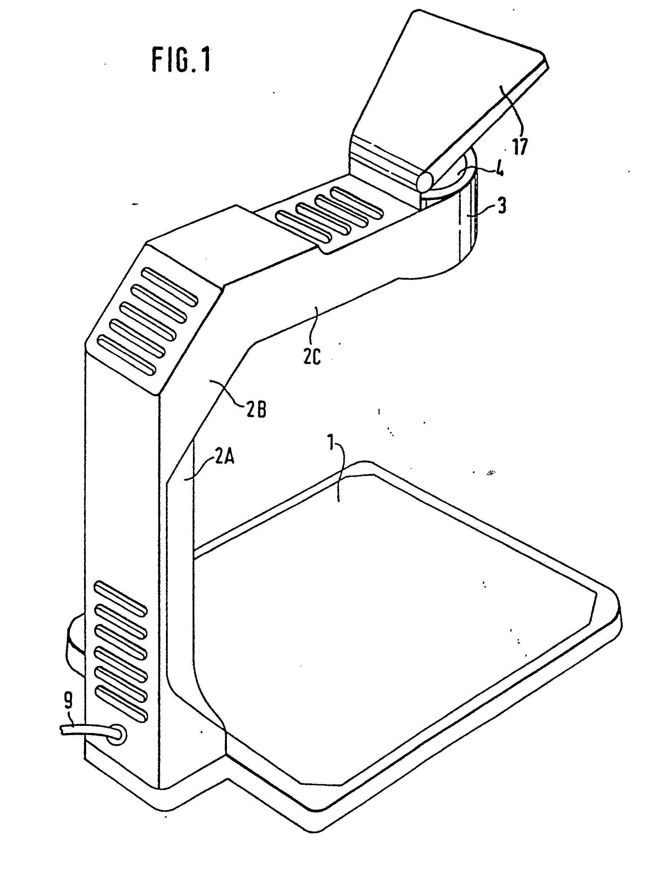

Der Overhead-Projektor der Fig. 1 weist eine sehr flache Schreibplatte 1 auf. In der Mitte einer Seite dieser Schreibplatte 1 ist der Pfosten 2 befestigt, der den als Objektivträger dienenden Projektionskopf 3 mit dem Objektiv 4 trägt. Dieser Pfosten 2 besteht aus einem im wesentlichen vertikal verlaufenden Teil 2A, einem im wesentlichen horizontal verlaufenden Teil 2C und einem diese beiden Teile verbindenden Mittelteil 2B. Dieser Pfosten ist aus einem Rohr mit rechteckigem Querschnitt hergestellt. Als Befestigungsvorrichtung können zwei am Ende sich etwas verjüngende Flacheisenstücke 5 dienen, die Schenkel eines U-förmigen Bauteiles sein können, das mit seinem mittleren Schenkel fest an der Schreibplatte 1 befestigt ist. Der rohrförmige Pfosten 2 ist von oben über die beiden Schenkel 5 so geschoben, daß die äußeren Breitseiten der Schenkel 5 an der inneren Oberfläche der Schmalseiten des Pfostens 2 anliegen, während die Schmalseiten der Schenkel 5 an den Rändern der inneren Oberfläche der Breitseiten des Pfostens 2 anliegen. Auf diese Weise ist eine sehr einfache Steckbefestigung realisiert, die aber völlig ausreichend ist. Diese Steckverbindung kann aber auch in anderer Weise verwirklicht werden.

Im Inneren des Pfostens 2 sind in dem vertikal verlaufenden Teil 2A die Teile des Hetzgerätes untergebracht, welches den Netzstrom in einen für die eingesetzte Lampe 6 geeigneten Speisestrom umsetzt. Dieses Netzgerät besteht aus einem eisenkernfreien elektronischen Transformator 7 zur Anpassung der Netzspannung an die Lampenspannung und einer Doppelspule 8. Ein Netzanschlußkabel 9 führt in den unteren Bereich des Pfostenteiles 2A. In diesem unteren Bereich sind auch Lufteinlaßöffnungen 10 für die Kühlung der Teile des Netzgerätes vorgesehen.

In dem Pfostenteil 2C ist die Lichtquelle untergebracht. Diese besteht aus der Lampe 6, einem Reflektorspiegel 11 und einem Kondensor 12. Dieser ist zweckmäßigerweise in einer klappbaren Fassung angeordnet, so daß er für einen Lampenwechsel aus dem Bereich vor der Lampe weggeklappt werden kann.

In dem Verbindungsteil 2B des Pfostens zwischen dem vertikalen Teil 2A und dem horizontalen Teil 2 ist der Ventilator 13 untergebracht, der Luft sowohl aus dem Pfostenteil 2A als auch aus dem Pfostenteil 2C ansaugt und durch Luftaustrittsschlitze 14 an der nach oben gerichteten Seite des Pfostenteiles 2B herausdrückt. Damit in den horizontalen Teil 2 des Pfostens Luft für die Kühlung der Lampe 6 eintreten kann, sind hier Lufteinlaßschlitze 15 vorgesehen.

Der Ventilator ist durch einen Elektromotor 16 angetrieben, der Objektivträger 3 trägt einen Umlenkspiegel 17.

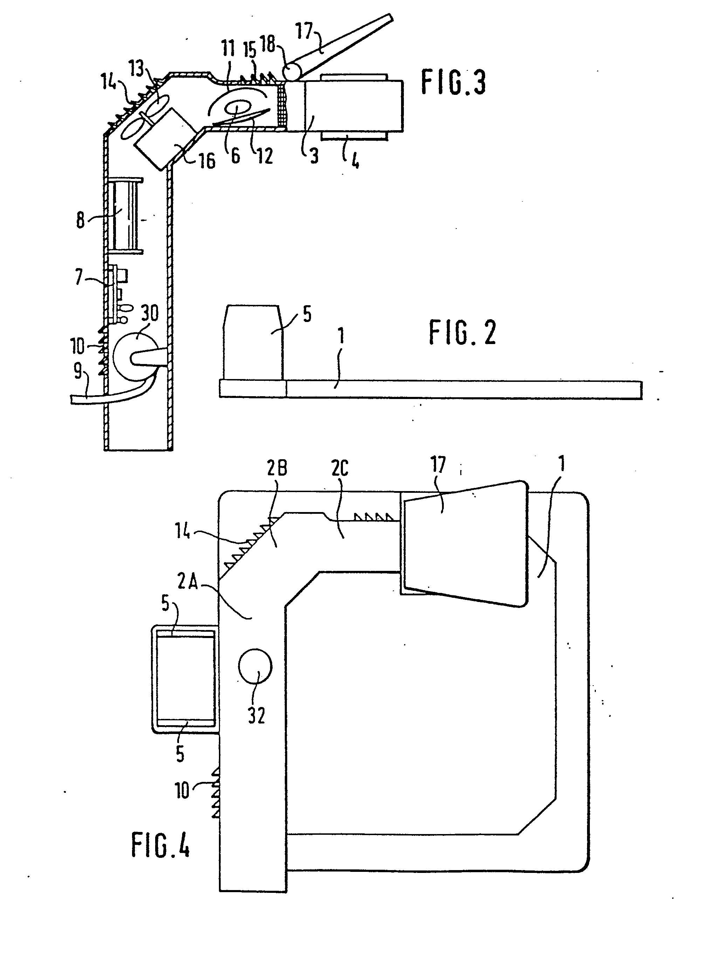

Der Objektivträger 3 kann mittels eines Gelenkes 18 an dem Pfostenteil 2C angebracht sein, um für den Transport in eine günstigere Stellung geklappt zu werden, wie dieses in Fig.4 dargestellt ist. Um den Pfosten 2 und den Objektivträger 3 während des Transportes an der Schreibplatte festzuhalten, sind an der Schreibplatte 1 Befestigungsvorrichtungen vorgesehen. Diese können aus unterhalb der Oberfläche angeordneten Magneten bestehen, wenn der Pfosten 2 aus einem ferromagnetischen Material ebenso wie der Objektivträger 3 hergestellt ist.

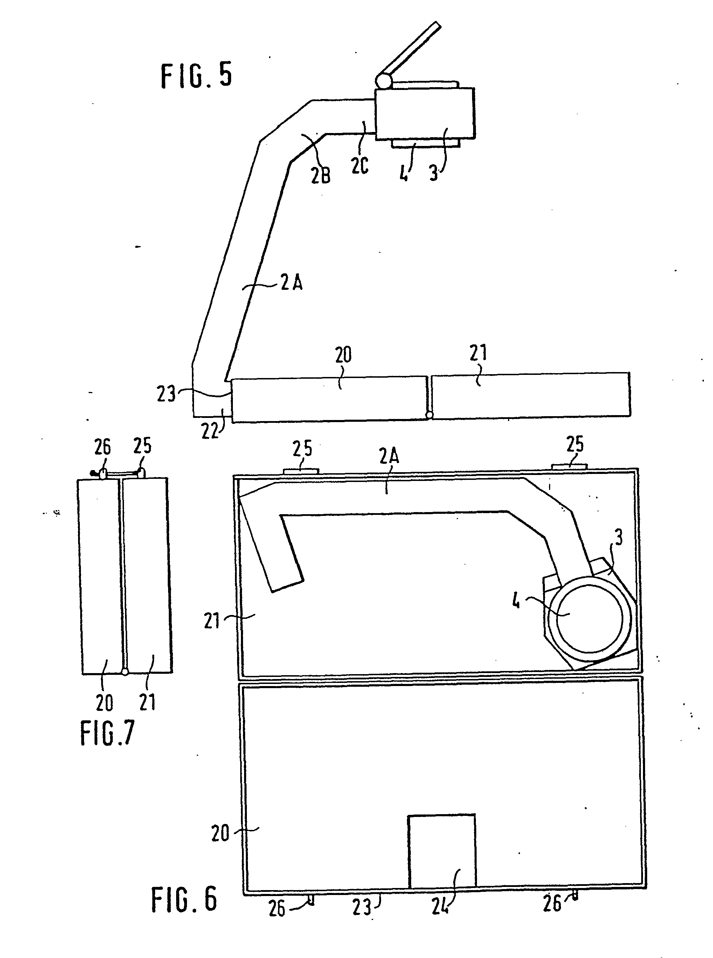

In den Fig. 5 bis 7 ist eine andere Ausführungsform dargestellt. Gleiche Teile sind hier mit gleichen Bezugszeichen versehen. Hier ist die Schreibplatte als Transportkoffer ausgebildet. Die Schreibplatte besteht hier aus zwei Teilen 20, 21, die durch ein Gelenk miteinander verbunden sind. Während in der vorhergehend beschriebenen Ausführungsform der Fig. 1 bis 4 der Pfosten 2 von oben auf die Befestigungsvorrichtung 5 gesteckt wird, weist bei dieser Ausführungsform der Pfosten 2 an seinem unteren Ende einen im wesentlichen senkrecht zum Pfostenteil 2A, also einen horizontal verlaufenden Ansatz 22 auf, der als Stecker für die mechanische Befestigung des Pfostens dient. In der Wandung 23 des Kastens 20 befindet sich eine Steckaufnahmevorrichtung 24, in die der Ansatz 22 formschlüssig einsteckbar ist. Im Inneren des Kastens 20 befinden sich Befestigungsvorrichtungen 24, mit denen der Pfosten 2 und der Objektivträger 3 im Inneren des Kastens 20 zu befestigen sind. Sind Pfosten 2 und Objektivträger 3 mit Objektiv 4 im Inneren des Kastens 20 untergebracht, so kann durch Verschwenken des Kastenteiles 21, welches sozusagen als Deckel dient, der Kasten verschlossen werden und durch eine Verriegelungsvorrichtung 25, bestehend aus einer verschwenkbaren Lasche 25 mit Loch auf der einen Seite und einem Stift 26 auf der anderen Seite, der durch das Loch in der Lasche 25 hindurchgreift, reisefertig verpackt werden.

Der Pfosten kann gleichzeitig als Tragegriff und als Kabelaufroller dienen. Aus dem Querschnitt des Pfostens in Fig. 3 ersieht man, daß im Inneren des Pfostens eine Kabelrolle 30 angebracht ist, mit der das elektrische Anschlußkabel 9 selbsttätig aufrollbar ist.

Am Pfosten können sich dann Bedienungselemente befinden, und zwar der Ein-Aus-schalter, aber auch Schalter für die Motorbetätigung des Zoom-Objektives, Betätigungsschalter für eine motorische Scharfeinstellung und evtl. für einen motorischen Lampenwechsel.

Zweckmäßigerweise wird die in der Schreibplatte eingebaute Fresnellinse durch eine Blende geschützt. Bei der Ausführungsform, bei der die Schreibplatte einen zweiteiligen Behälter bildet, wird die aus zwei Teilen zusammengesetzte Fresnellinse zweckmäßigerweise durch eine Abdeckplatte geschützt.

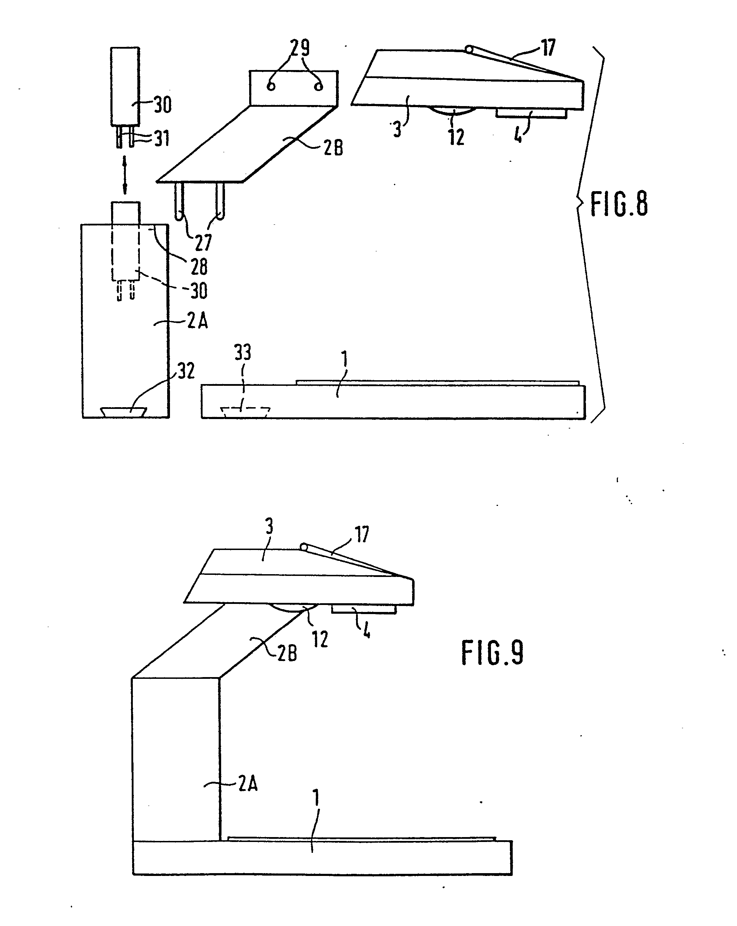

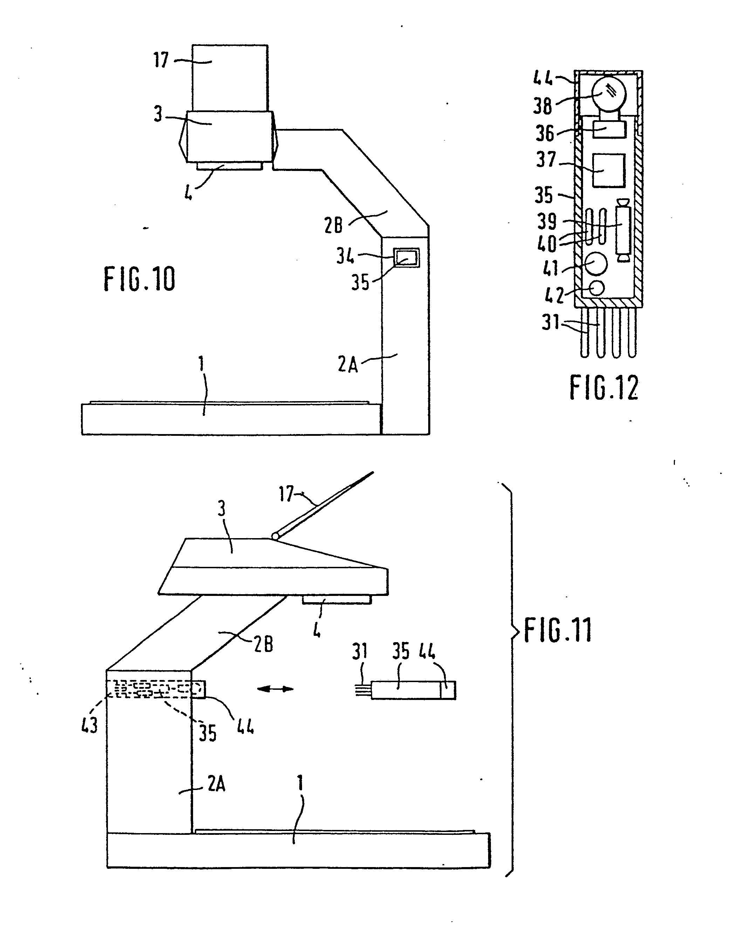

Der Overhead-Projektor der Fig. 8 und 9 weist einen zweiteiligen Pfosten auf. Diese beiden Teile 2A, 2B werden dadurch zusammengesteckt, daß die Stecker 27 in Löcher in der Stirnseite 28 des Pfostenteiles 2A eingesteckt werden. Der Projektionskopf 3 wird mit zwei nicht sichtbaren, weil auf der abgelegenen Seite angeordneten Steckern in die Löcher 29 am Pfostenteil 2B eingesteckt. Hinter diesen Löchern 29 befinden sich elektrische Kontakte, die mit den Steckern in elektrischen Kontakt treten, sobald die Stecker eingesteckt sind. In die Stirnseite 28 ist die Eingangsstufe 30 des Netzgerätes einsteckbar, deren Stecker 31 in eine im Inneren des Pfostenteiles 2A befindliche, zum Netzgerät gehörende Fassung eingesteckt werden. Diese Fassung ist so angeordnet, daß ein Teil der Eingangsstufe 30 oben aus der Stirnseite 28 herausragt, damit dieser Teil von den Fingern einer Hand angefaßt werden kann, herausgezogen werden kann und gegen eine andere Eingangsstufe ausgewechselt werden kann. Am unteren Ende des Bauteiles 2A befindet sich eine rechtwinklig angebrachte schwalbenschwanzförmige Leiste 32, die in die schwalbenschwanzförmige Öffnung 33 der Grundplatte einsteckbar ist - In Fig. 9 ist der betriebsfertige Projektor in Seitenansicht dargestellt, der aus den in Fig. 8 gezeigten Teilen zusammengesteckt ist. Die Eingangsstufe befindet sich dabei im Inneren des Pfostens 2A, 2B.

In Fig. 10 und 11 ist eine andere Ausführungsform eines Overhead-Projektors gezeigt. Gleiche Bauteile sind hier mit gleichen Bezugsziffern versehen. In den das Netzgerät aufnehmenden Pfostenteil 2A ist in eine Öffnung 34 das Gehäuse 35 der Eingangsstufe eingesteckt. Dieses Gehäuse 35 ist an dem den Steckern 31 abgewandten Ende mit einer lichtdurchlässigen Kappe 44 versehen, wobei hinter der Kappe eine Lampe 38 befindlich ist, die in die Fassung 36 eingesetzt ist. Diese Lampe 38 wird über die Steuerungsschaltung 37 mit Strom versorgt. Die Steuerungsschaltung 37 läßt die Lampe 38 beispielsweise dann aufleuchten, wenn nicht die richtige, für die Eingangsstufe bestimmte Spannung im Netz vorhanden ist. In dem Gehäuse 35 dieser Eingangsstufe befinden sich weiter eine Sicherung 39, zwei Widerstände 40, ein Transistor 41 und ein Kondensator 42.

Das Gehäuse 35 wird soweit in das Loch 34 eingeschoben, bis die Stecker 31 in die Fassung 43 im Inneren des Tragarmteiles 2A eingeschoben sind. Diese Fassung 43 ist in einem solchen Abstand von der Öffnung 34 angeordnet, daß ein Teil der Eingangsstufe, zumindest die Kappe 44, aus dem Tragarmteil 2A herausragt und als Handhabe benutzt werden kann, also mit zwei Fingern einer Hand ergriffen werden kann.

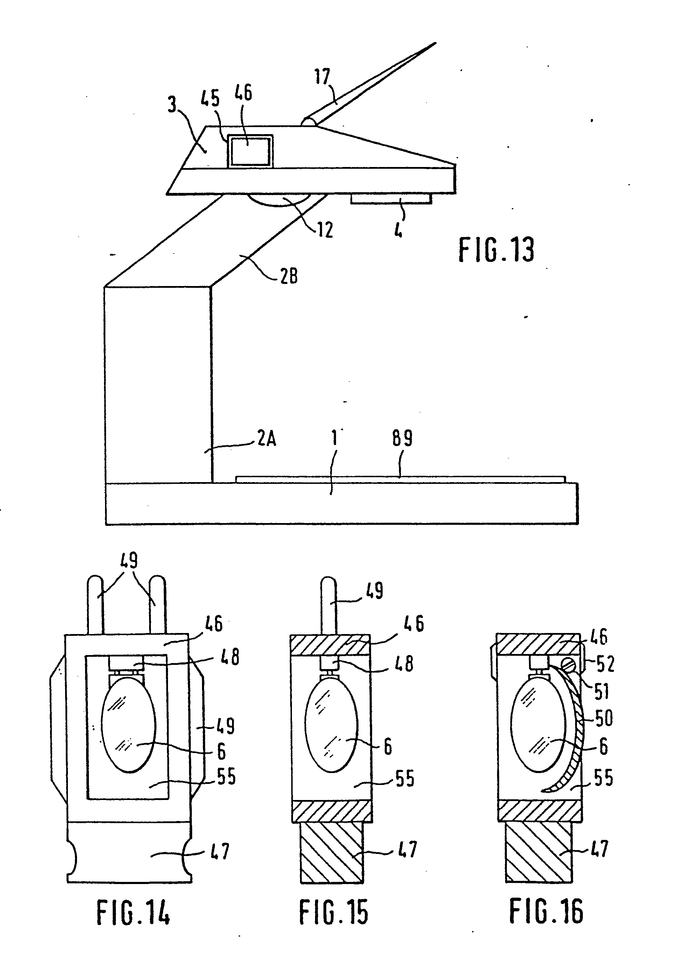

Im Projektionskopf 3 in der Fig. 13 ist eine Öffnung 45 vorgesehen, in die ein Rahmen 46 derart eingeschoben ist, daß lediglich der Handgriff 47 aus dieser Öffnung herausschaut.

Der Rahmen 46 besteht aus vier Holmen, die das Fenster 55 des Rahmens 46 umgeben. Im Inneren dieses Fensters 55 ist der Sockel 48 angeordnet, in den die Lampe 6 eingesteckt ist. An der Außenseite des einen Rahmenholmes ist die Handhabe bzw. der Handgriff 47 angeordnet.

Im Ausführungsbeispiel der Fig. 14 und 15 sind an demjenigen Holm, der dem Holm mit der Handhabe 47 gegenüberliegt, Kontaktstifte 49 angeordnet, die in einen Sockel im Inneren des Projektionskopfes 3 eingeschoben werden. Bei dieser Ausführungsform bedarf es keiner Führungsschienen, obwohl es zweckmäßig ist, an den Außenseiten der Längsholme Schienen 49 vorzusehen, die in Führungsschienen eingeschoben werden.

Im Ausführungsbeispiel der Fig. 16 trägt der Rahmen 46 nicht nur die Lampe 6, sondern zusätzlich auch einen Reflektor 50. Es ist hier mindestens eine Einstellschraube 51 vorgesehen, mit der die gegenseitige Lage des Reflektors 50 und der Lampe 6 einstellbar sind. Bei dieser Ausführungsform sind die Schienen 52 aus leitfähigem Material hergestellt. Jede Schiene ist mit einem Lampenkontakt über nicht in der Zeichnung sichtbare Zuleitungen verbunden. Anstelle der leitfähigen Schienen 52 könnten auch andere Kontaktflächen am Rahmen 46 vorgesehen sein.

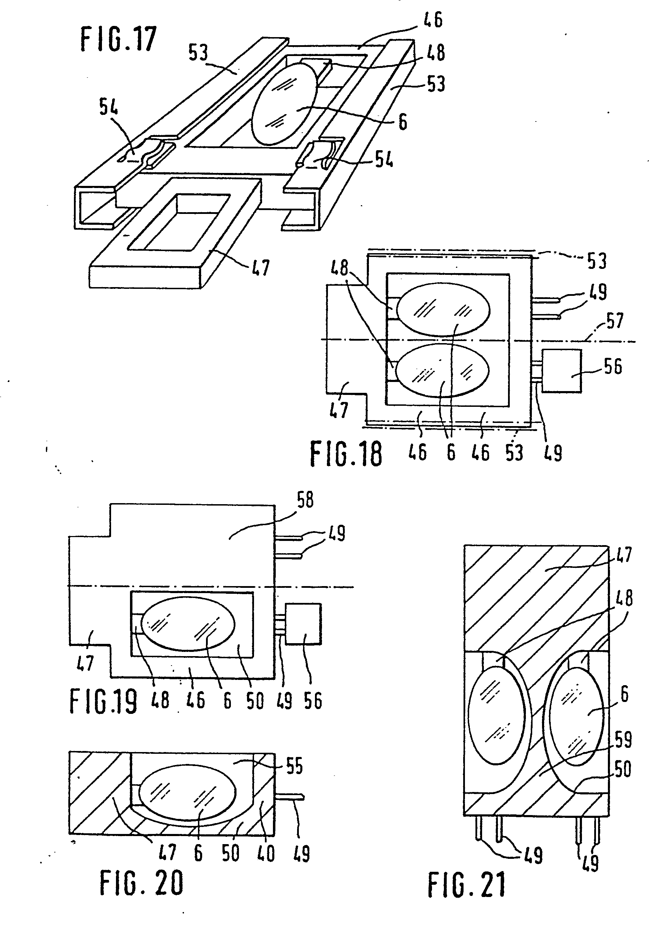

Wie Fig. 17 zeigt, ist dieser Rahmen in Führungsschienen 53 eingeschoben, die ebenfalls leitfähig sind. Diese weisen federnde Kontakte 54 auf, die eine beständig gute Kontaktverbindung zwischen den Schienen 52 und den Führungsschienen 53 gewährleisten.

Ein Ausführungsbeispiel eines Rahmens mit zwei Lampen 6 ist in Fig. 18 dargestellt. Im Fenster 55 des Rahmens 46 sind hier zwei Sockel 48 nebeneinander und daher auch zwei Lampen 6 nebeneinander angeordnet. Auch hier befindet sich eine Handhabe 47 auf der einen Seite des Rahmens, auf der anderen sind es Kontaktstifte 49. Der Rahmen wird von Führungsschienen 53 getregen. Der Sockel 56, in dem sich die elektrischen Gegenkontakte für die Kontaktstifte 49 befinden, ist unsymmetrisch zu der geometrischen Achse 57 des Rahmens angeordnet. Hierdurch ist erreicht, daß nur eine Lampe mit elektrischem Strom versorgt wird. Bei einem Defekt an der mit Strom versorgten Lampe wird der Rahmen einfach aus dem Projektor herausgezogen, um 180° um seine geometrische Achse 57 gedreht und dann wieder eingesteckt, wodurch nun die Kontaktstifte der noch unversehrten Lampe in den Sockel 56 kommen und dadurch die noch unversehrte Lampe mit Strom versorgt wird.

In Fig. 19 und 20 ist ein anderes Ausführungsbeispiel dargestellt. Hier ist der Rahmen 46 ein Guß- oder Preßstück, welches auf gegenüberliegenden Seiten zwei Reflektoren 50 aufweist, je ein Reflektor 50 ist einer Lampe 6 zugeordnet. Man sieht im Bild nur eine Lampe 6, weil die andere Lampe durch die Rückseite 58 des einen Reflektors 50 verdeckt ist.

Im Ausführungsbeispiel der Fig. 21, das im Querschnitt dargestellt ist, ist der Rahmen 46 zusammen mit den beiden Reflektoren 50, die hier durch einen Körper 59 gebildet werden einstückig als Guß- oder Preßstück hergestellt. Die beiden Lampen 6 und der zwischen ihnen liegende Reflektorkörper 59 sind hier nicht nebeneinander im Fenster 55 des Rahmens 46 angeordnet, sondern hintereinander.

In den Fig. 19 bis 21 ist der Rahmen so ausgebildet, daß er nicht von einer Seite zur anderen durchgehende Fenster wie der vorher dargestellte Rahmen aufweist, sondern Fensterhöhlen, die auf der der Fensteröffnung abgewandten Seite durch einen Reflektor 50 abgeschlossen sind. Während die Rahmen der Fig. 13 bis 18 nur ein Fenster aufweisen, weisen die Rahmen der Fig. 19 bis 21 zwei Fenster, und zwar auf gegenüberliegenden Seiten auf.

Statt von einem Rahmen 46 zu sprechen, könnte man diesen Körper auch als einschiebbare Lampenhalterung bezeichnen, die in Fig. 13 - 18 als rahmenförmige Lampenhalterung und die in Fig. 19 - 21 als quaderförmige Lampenhalterung mit zwei auf gegenüberliegenden Seiten angeordneten Ausnehmungen in Form von Höhlen, in denen der Sockel und die Lampe untergebracht sind und deren hintere Wand als Reflektor ausgebildet ist.

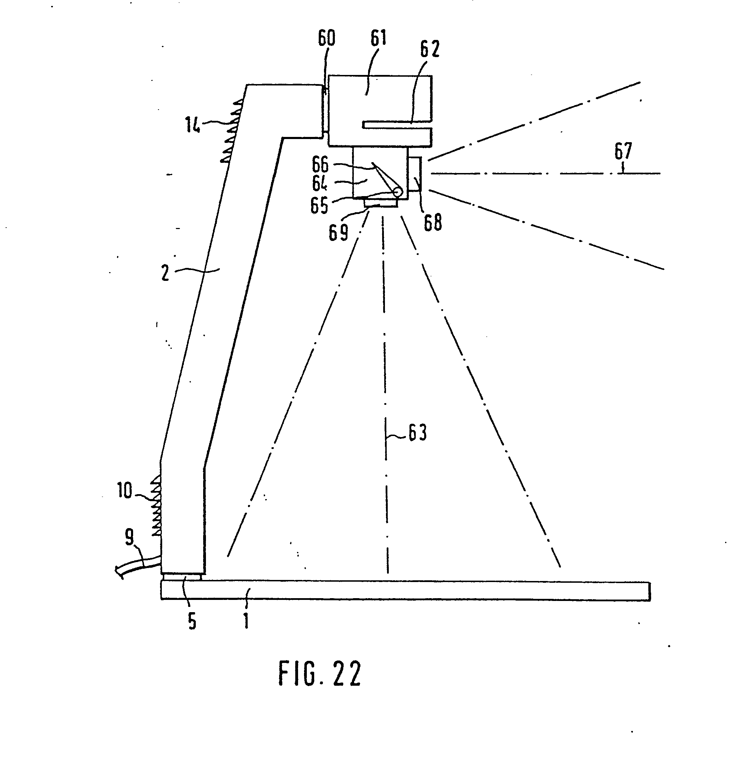

In Fig. 22 ist mittels der Schnellkupplung 60 ein Mikrofilmprojektor 61 an dem Pfosten 2 angekoppelt. Dieser Mikrofilmprojektor 61 besteht aus einem Gehäuse, in welchem eine Lichtquelle, ein Objektiv und eine Bühne untergebracht sind, auf der die zu projizierenden Mikrofilme liegen. Diese werden durch den Schlitz 62 in das Innere des Mikrofilm-Projektors eingelegt. - Die optische Achse 63 des Objektives des Mikrofilm-Projektors 61 verläuft nach unten. Sie läuft durch eine optische Umlenkvorrichtung 64, die vor dem Objektiv des Mikrofilmprojektors 61 angeordnet ist. Diese weist ein Gehäuse und im Inneren des Gehäuses einen lichtdurchlässigen Umlenkspiegel auf, der um die Achse 65 verschwenkbar ist und etwa diejenige Stellung einnimmt, die der dem Verschwenken des Umlenkspiegels dienende Handhebel 66 aufweist. Mit Hilfe dieser Umlenkvorrichtung 64 wird ein Teil der Lichtleistung über den durch die optische Achse 67 gekennzeichneten Weg durch das Austrittsfenster 68 an die Wand projiziert. Der Rest der Lichtleistung wird durch das Austrittsfenster 69 auf die Schreibplatte 1 projiziert. Somit besteht für einen Vortragenden die Möglichkeit, obwohl er mit dem Rücken zur Projektionswand sitzt, das projizierte Bild auf der Grundplatte zu sehen. Gleichzeitig kann er von seinem Sitz vor dem Stehbildwerfer aus ohne Verdrehen des Kopfes sein Publikum sehen.

Der Benutzer kann aber diesen Stehbildwerfer auch als Mikrofilmlesegerät benutzen. Verschwenkt er den Handhebel 66 in eine vertikale Stellung, also im Uhrzeigerdrehsinn, so fällt kein Licht mehr durch das Austrittsfenster 68 und alles Licht fällt nur auf die Schreibplatte 1.

Legt der Benutzer ein Blatt Papier oder eine Folie oder einen sonstigen zum Bezeichnen geeigneten Gegenstand auf die Grundplatte 1, so kann er diesen Gegenstand während der Projektion beschriften oder bezeichnen, indem er beispielsweise projizierte Konturen nachzeichnet. Er kann also mit diesem Lesegerät nicht nur lesen, sondern es in weitaus vielfältigerer Weise ausnutzen.

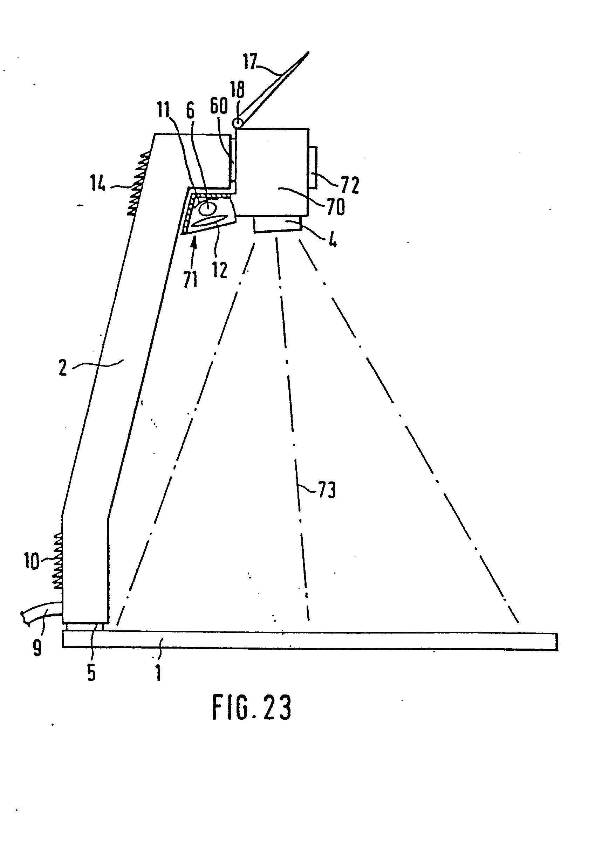

In Fig. 23 ist an dem Pfosten 2 ein Overhead-Projektionskopf 70 angebracht. Dieser nimmt nicht nur das Overhead-Projektionsobjektiv 4 auf und trägt an seiner Oberseite den Umlenkspiegel 17, der um das Gelenk 18 verschwenkbar ist, sondern er trägt in einem Ansatz 71 auch eine Lichtquelle, die aus der Lampe 6, dem Kondensor 12 und dem Reflektor 41 besteht. Mit dieser Lichtquelle wird die Schreibplatte 1 beleuchtet, auf die eine Overhead-Projektionsfolie gelegt wird, die dann mit Hilfe der in der Schreibplatte 1 eingelegten Fresnellinse projiziert wird.

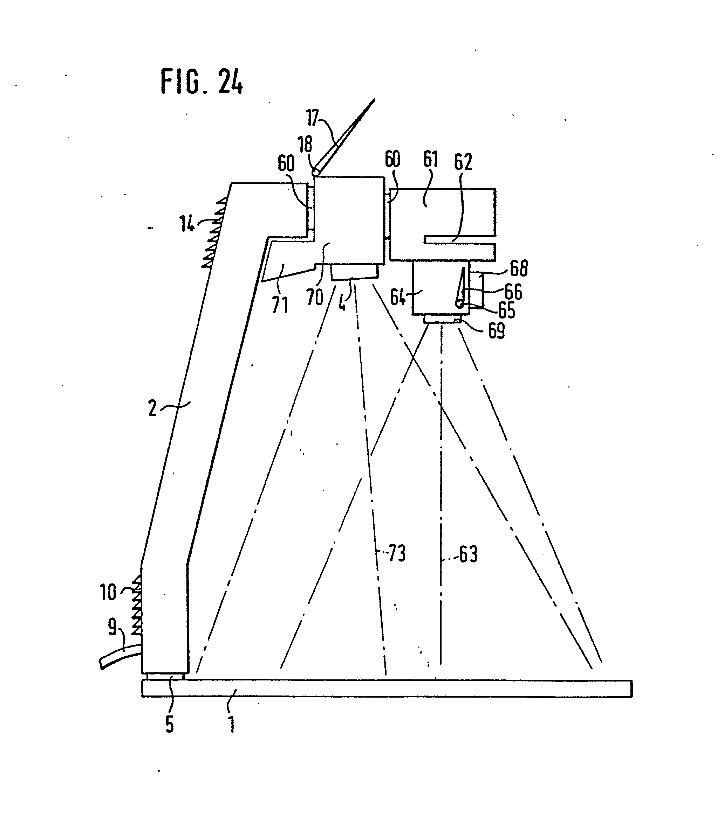

Dieser Overhead-Projektionskopf 4 weist auf der dem Pfosten 2 abgekehrten Seite ein weiteres Schnellkupplungsteil 72 auf, wie es auch am Pfosten 2 angebracht ist. Mit diesem Schnellkupplungsteil 72 kann, wie es Fig. 24 zeigt, an den am Pfosten 2 angekoppelten Overhead-Projektorkopf 4 der Mikrofilm-Projektorkopf 61 angekoppelt werden. Dann trägt der Pfosten 2 sowohl den Overhead-Projektorkopf 4 als auch den davor angeordneten Mikrofilm-Projektorkopf 61. - Für die Projektion geht man zweckmäßigerweise so vor, daß man den Handhebel 66 des Mikrofilm-Projektors in die vertikale Stellung bringt, so daß die gesamte Lichtleistung des Mikrofilmprojektors durch das Austrittsfenster 69 austritt und auf die Grundplatte 1 fällt, während durch das Austrittsfenster 68 kein Licht mehr austritt. Auf diese Weise wird mit dem Mikrofilm-Projektorkopf 61 der größte Teil der in der Grundplatte 1 untergebrachten Fresnellinse ausgeleuchtet und die von dieser verspiegelten Fresnellinse reflektierte Lichtenergie verläuft über die optische Achse 73 in das Overhead-Objektiv 4 und wird mittels des Umlenkspiegels 17 an die Wand geworfen. Auf diese Weise ist dem Projizierenden die Möglichkeit gegeben, durch Auflage einer transparenten Overhead-Folie auf die Grundplatte 1 in dem projizierten Mikrofilmbild zu zeichnen und zu schreiben. Dabei bleibt der Mikrofilm von der Beschriftung unberührt. Lediglich eine leere Overhead-Projektionsfolie wird mit der Beschriftung und Bezeichnung versehen. Bei dieser Tätigkeit braucht der Vortragende seinen Kopf nicht zu wenden, wenn er sein Publikum anschauen will.

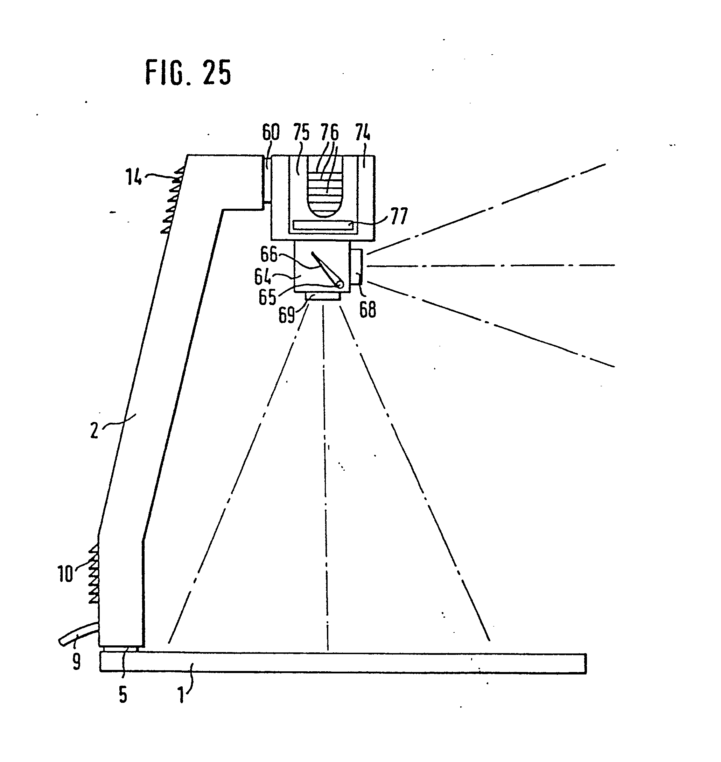

In Fig. 25 ist an dem Pfosten 2 des Stehbildwerfers mittels der Schnellkupplung 60 der Diaprojektorkopf 74 angekoppelt. Dieser weist auf der dem Betrachter zugewandten Seite ein Magazin 75 für Diapositive 76 auf, die mittels eines Schiebers 77 in das Innere des Dia-Projektorkopfes 74 eingeschoben werden. In diesem Dia-Projektorkopf ist neben der Bildbühne, auf die die Diapositive 76 mit Hilfe des Schiebers 77 geschoben werden, noch eine nicht dargestellte Lichtquelle und ein nicht dargestelltes Objektiv untergebracht. Vor diesem Objektiv ist die Umlenkvorrichtung 64 angeordnet, die auch vor dem Mikrofilmprojektor 61 angeordnet ist. Durch das Austrittsfenster 68 fällt das projizierte Bild auf die Projektionswand, durch das Austrittsfenster 69 auf die Grundplatte 1 des Stehbildwerfers. Der Vortragende kann hier in der gleichen Weise arbeiten, wie mit dem Mikrofilmprojektor 61, er kann an die Wand projizieren und gleichzeitig das projizierte Bild auf die Grundplatte 1 projizieren, er kann dieses Gerät auch als Diabetrachter benutzen, ohne an die Wand zu projizieren, werd er den Handhebel 66 vertikal stellt.

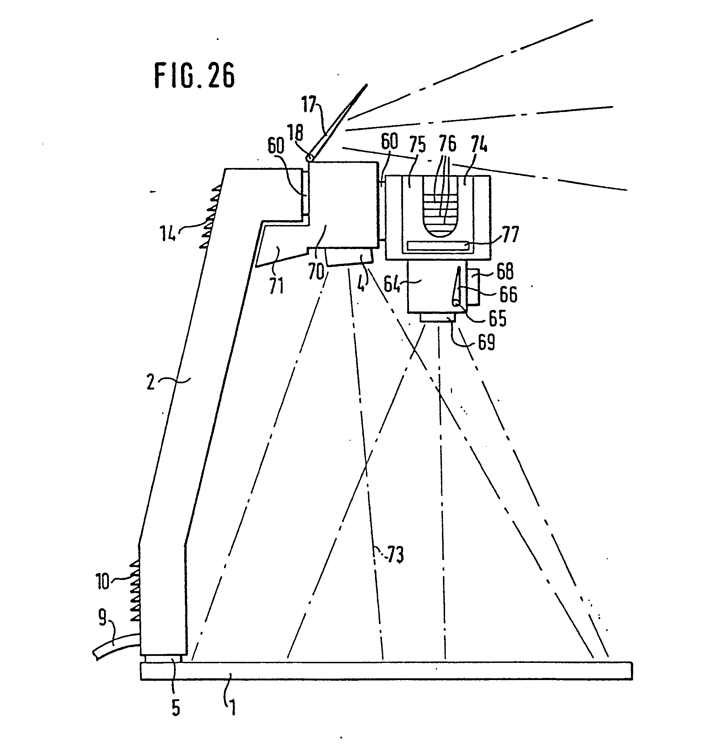

Der Vortragende hat aber auch die Möglichkeit, den Diaprojektorkopf 74 zusammen mit dem Overhead-Projektorkopf 4 gleichzeitig zu benutzen, wie das in Fig.26 dargestellt ist. Hier schaltet der Vortragende wieder die Lichtquelle 71 ab und arbeitet bei der Overhead-Projektion mit demjenigen Licht, das der Diaprojektorkopf 74 liefert und in seiner Gesamtheit nach Vertikalstellung des Spiegels mit dem Handhebel 66 auf die Grundplatte 1 wirft.

Als Kupplung 14 können verschiedene Kupplungsarten verwendet werden, solche mit Bajonettverschluß, Schraubgewinde und andere.

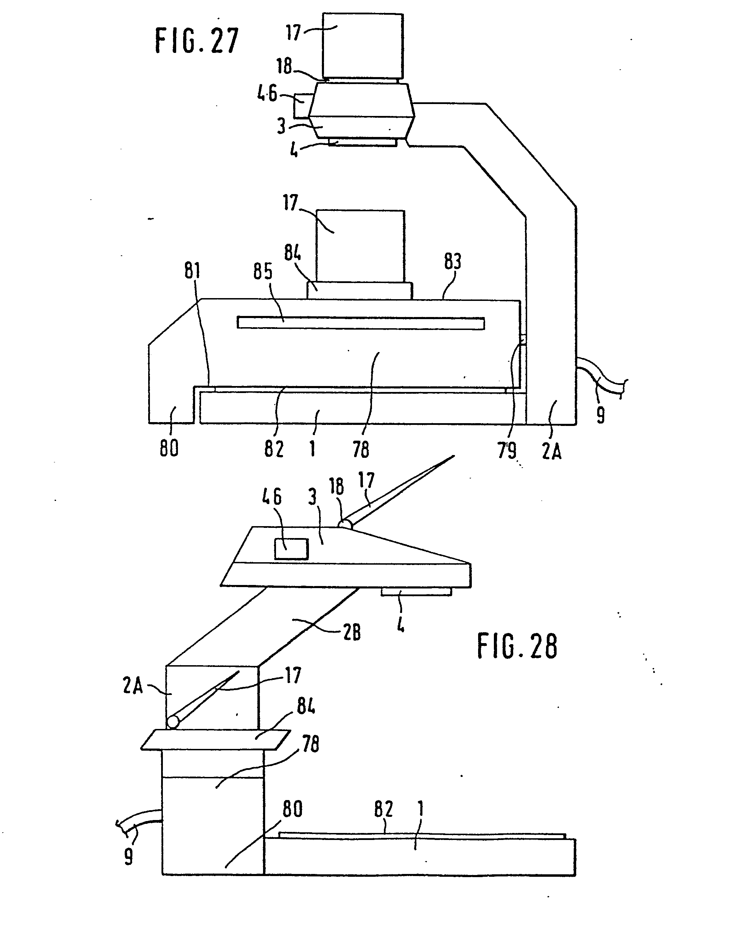

Im Ausführungsbeispiel der Fig. 27 und 28 ist ein zusammensteckbarer Overheadprojektor dargestellt, von dessen im Tragarm 2 angeordnetem Netzgerät auch ein Diaprojektor 78 gespeist wird. Der Diaprojektor 78 ist auch als ein ansteckbares Bauteil ausgeführt. Hier sind es zwei Kontaktstifte 79, welche in Löcher im Tragarm einsteckbar sind. Der Diaprojektor ist ein längliches Gebilde, welches auf der den Kontaktstiften 79 abgewandten Seite in einen Fuß 80 ausläuft, der sich neben der Grundplatte 1 auf der Aufstellfläche abstützt. Dieser Fuß ist aber nicht unbedingt notwendig, der Diaprojektor könnte sich auch mit seiner Unterseite 81 auf der Oberfläche der Grundplatte 1 abstützen, wenn diese über die Schreibfläche 82 hinaus verlängert ist. Auf seiner Oberfläche 83 weist der Diaprojektor einen Aufsatz 84 auf, der in seinem Inneren das Projektionsobjektiv und an seiner einen Kante einen Reflektionsspiegel 17 aufweist. Dieser ist ebenfalls klappbar ausgeführt. Der Aufsatz 84 ist zweckmäßigerweise drehbar befestigt, so daß der Spiegel in verschiedene Richtungen verschwenkt werden kann. In den Längsseiten des Gehäuses des Diaprojektors 78 sind Schlitze 85 für das Einschieben der zu projizierenden Diapositive vorgesehen.

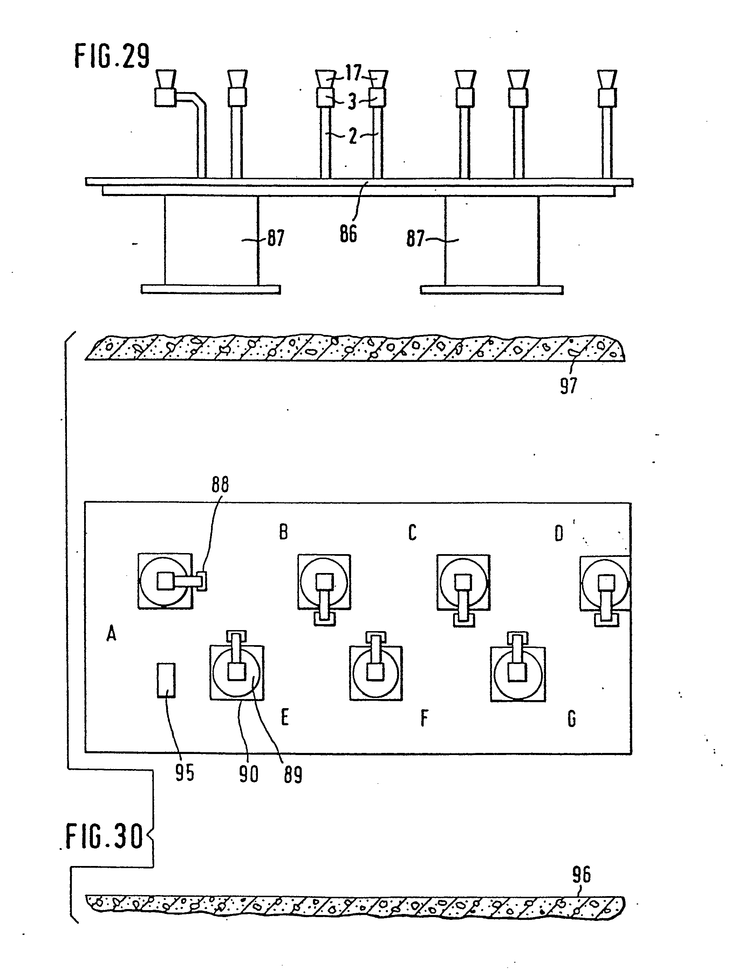

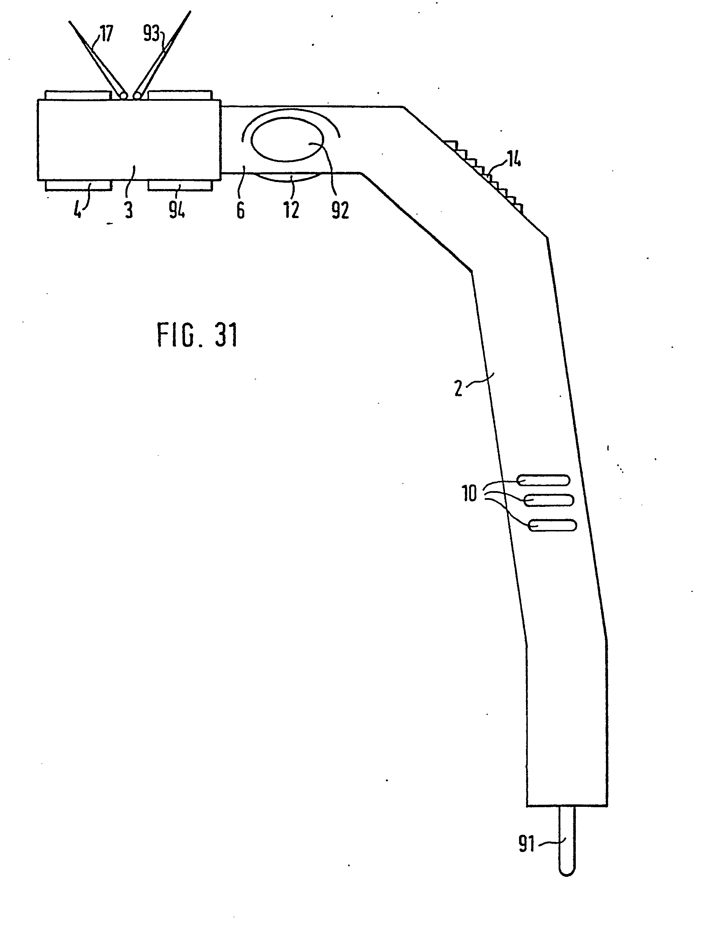

Zur Erläuterung der Fig. 29 - 31:
Die Tischplatte 86 des Konferenztisches ist auf zwei Füße 87 aufgesetzt. In die Oberfläche der Tischplatte 86 sind Halterungen 88 eingelassen, die durch eine verschwenkbare Abdeckklappe abdeckbar sein können. Die Oberfläche dieser Abdeckklappe liegt in verschlossenem Zustand in der Ebene der Oberfläche der Tischplatte. In jeder Halterung 88 ist der Pfosten 2 eines Overhead-Projektors einsteckbar. In der Tischplatte 86 sind neben der Halterung 88 jeweils Vertiefungen angeordnet, in die die Fresnellinse 89 enthaltende Platten 90 einlegbar sind.

Diese Platten 90 weisen eine Oberfläche auf, die entweder durch die glatte Seite der Fresnellinse 89 oder durch eine zusätzliche Schreibplatte gebildet sind. Die gegenüberliegende Seite dieser Platte 90 weist zweckmäßigerweise eine Oberfläche auf, die aus dem gleichen Material wie die Tischoberfläche besteht. Wird in eine Halterung 88 ein Pfosten 2 mit einem Overhead-Projektionsobjektiv 4 eingesteckt, so kann im episkopischen Verfahren unmittelbar von der Tischoberfläche projiziert werden. Für ein Projizieren im diaskopischen Verfahren wird die Platte 90 in die Vertiefung so eingelegt, daß die Schreibfläche bzw. die Oberfläche der Fresnellinse 89 in der Tischplattenebene liegt. Wird der Pfosten 2 aus der Halterung 3 entfernt, so braucht die Platte 90 nur umgedreht zu werden, so daß die Unterseite 1 nach oben gekehrt ist, um ein einheitliches Bild der Tischoberfläche an dieser Stelle zu erhalten.

Die Halterung 88 weist zweckmäßigemveise in ihrem Inneren elektrische Anschlußkontakte auf, die an das elektrische Netz angeschlossen sind. An diese Anschlußkontakte sind Kontakte 91 in Form von Steckern steckbar, die sich am unteren Ende des Ständers befinden. Die Seitenflächen der Halterung 88 sind so ausgebildet, daß sie den unteren Teil des Ständers klemmend aufnehmen und diesem einen festen Einstecksitz geben.

Der Pfosten 2 trägt zweckmäßigerweise zwei Objektive 4, 94. Jedem dieser Objektive 4, 94 ist ein Umlenkspiegel 17, 93 zugeordnet, mit denen das durch das ihnen zugeordnete Objektiv aufgefangene Bild an eine Wand projiziert wird. Da die Objektive 4, 94 unmittelbar nebeneinander angeordnet sind, nehmen sie das gleiche Bild auf, nämlich dasjenige, das sie von einer auf die Platte 90 gelegten Vorlage erhalten. Dieses wird auf zwei gegenüberliegende Wände projiziert.

In dem Pfosten ist auch die Lichtquelle 6 angebracht. Diese weist zwei Optiken auf, eine Optik, die auf die Platte 90 gerichtet ist und eine Optik 92, die auf die als Arbeitsplatz dienende Fläche neben der Platte 90 als Arbeitsplatzleuchte gerichtet ist.

In den Fig. 29, 30 ist ein rechteckiger Konferenztisch dargestellt mit den Arbeitsplätzen A für den Konferenzleiter und die Arbeitsplätze B bis G für die übrigen Teilnehmer. Am Arbeitsplatz des Konferenzleiters befindet sich noch ein Schaltpult 95. Die von den Overhead-Projektoren projizierten Bilder werden an die Wände 96, 97 zu beiden Seiten des Konferenztisches projiziert.

**Patentansprüche**

1. Overhead-Projektor, bestehend aus einem Fuß mit einem an diesem befestigten Pfosten für ein Gehäuse, das die Lichtquelle aufnimmt und das Objektiv trägt und aus einem Netzteil sowie einem Ventilator, dadurch gekennzeichnet,

daß der Pfosten (2) in seinem Inneren das Netzteil (7, 8) aufnimmt,

daß im Inneren des Pfostens dar Ventilator für die Kühlung von Lampe und/oder Netzteil angeordnet ist,

und daß zumindest ein Teil des Pfostens durch mindestens einen Lufteinlaß (10,15) und einen Luftauslaß (14) als Kühlluftkanal ausgebildet ist.

2. Overhead-Projektor nach Anspruch 1, dadurch gekennzeichnet,

daß das Netzanschlußkabel (9) aus dem unteren Bereich des Pfostens (2) herausgeführt ist.

3. Overhead-Projektor nach Anspruch 1, dadurch gekennzeichnet,

daß der Transformator des Netzteiles (7,8) ein elektronischer Transformator (7) ist.

4. Overhead-Projektor nach Anspruch 1, dadurch gekennzeichnet,

daß der Pfosten mit dem Fuß durch eine Steckverbindungsvorrichtung (5) verbunden ist.

5. Overhead-Projektor nach Anspruch 1 bis 3, dadurch gekennzeichnet, daß der Fuß eine als Schreibplatte dienende Platte (1) mit einer verspiegelten Fresnellinse ist.

6. Overhead-Projektor nach Anspruch 1, dadurch gekennzeichnet,

daß an dem Fuß zusätzliche Befestigungsvorrichtungen (24), vorzugsweise in Form von Magneten für den Pfosten (2) während des Transportes angebracht sind.

7. Overhead-Projektor nach Anspruch 1, dadurch gekennzeichnet,

daß der Pfosten (2) aus zwei unter einem stumpfen Winkel ineinander übergehenden Teilen besteht, von denen der untere das Netzteil (7, 8) und der obere die Lampe (6) aufnimmt, wobei das freie Ende des oberen Teiles des Pfostens (2) die Objektivhalterung (3) trägt.

8. Overhead-Projektor nach Anspruch 1, dadurch gekennzeichnet,

daß der Pfosten (2) aus drei unter stumpfen Winkeln ineinander übergehenden Teilen (2A, 2B, 2C) besteht, von denen der untere das Netzteil (7, 8), der mittlere den Ventilator (13) und der obere, der an seinem freien Ende die Objektivhalterung (3) trägt, die Lampe (6) aufnimmt.

9. Overhead-Projektor nach Anspruch 8, dadurch gekennzeichnet,

daß der Luftauslaß (14) an der Außenseite des mittleren Pfostenteiles (2C) angeordnet ist.

10. Overhead-Projektor nach Anspruch 1, dadurch gekennzeichnet,

daß der im wesentlichen vertikal verlaufende Teil (2A) des Pfostens (2) aus zwei teleskopierbaren Teilen (2AA, 2AB) besteht und mit einer die Pfostenlänge einstellenden Vorrichtung versehen ist.

11. Overhead-Projektor nach Anspruch 1, dadurch gekennzeichnet,

daß zumindest die Eingangsstufe (30) des Netzgerätes als austauschbares Bauteil ausgebildet ist, vorzugsweise als steckbares Bauteil mit einem Stecker (31), der in eine Faßung bzw. einen Sockel an dem Netzgerät bzw. den anderen Teilen des Netzgerätes einsteckbar ist.

12. Overhead-Projektor nach Anspruch 11, dadurch gekennzeichnet,

daß die Eingangsstufe (30) des Netzgerätes in einem gesonderten Gehäuse (35) untergebracht ist, wobei vorzugsweise das Gehäuse (35) der Eingangsstufe (30) des Netzgerätes die Form eines Zylinders oder eines Quaders aufweist.

13. Overhead-Projektor nach Anspruch 1, dadurch gekennzeichnet,

daß der Pfosten (2) des Projektors eine Öffnung (34) für das Einstecken des Gehäuses (35) der Eingangsstufe (30) aufweist und daß das Gehäuse (35) der Eingangsstufe aus dem Pfosten (2) des Projektors ein Stück heraussteht.

14. Overhead-Projektor nach Anspruch 11, dadurch gekennzeichnet,

daß die dem Stecker (31) abgewandte Seite des Gehäuses (35) der Eingangsstufe als Handgriff ausgebildet ist.

15. Overhead-Projektor nach Anspruch 1, dadurch gekennzeichnet,

daß in dem Gehäuse (35) der Eingangsstufe (30) mindestens ein Widerstand (40) und vorzugeweise auch eine Sicherung (39) angeordnet ist und eventuell eine Lampe (38) untergebracht ist, wobei die dem Stecker (31) abgewandte Seite (44) des Gehäuses (35) lichtdurchlässig ist.

16. Overhead-Projektor nach Anspruch 1, 7 und 11, dadurch gekennzeichnet,

daß der den Projektionskopf (3) tragende Pfosten (2) geteilt ist, daß seine Teile (2A, 2B) durch eine Steckverbindung miteinander verbunden sind, und daß in die eine Stirnseite eines dieser Teile die einsteckbare Stufe des Netzteiles (30) eingesteckt ist.

17. Overhead-Projektor nach Anspruch 10, dadurch gekennzeichnet,

daß der die Eingangsstufe des Netzteiles (30) aufnehmende Teil (2A) des Pfostens (2) ein Fenster aufweist, durch welches die Eingangsstufe oder ihr Gehäuse zu sehen ist.

18. Overhead-Projektor nach Anspruch 1, dadurch gekennzeichnet,

daß die Lampe (6) mit ihrer Fassung (48) und vorzugsweise ein Reflektor (50) in einem Rahmen (46) untergebraoht ist, der in innerhalb des Gehäuses angeordneten Führungsschienen (53) durch eine Öffnung (45) des Gehäuses (3) ein- und ausschiebbar ist und der elektrische Kontakte (10) in Form von Stiften oder Flächen aus leitfähigem Material trägt, welche im eingeschobenen Zustand des Rahmens (46) mit im Inneren des Gehäuses (3) angeordneten Gegenkontakten in einem Sockel (17) in Berührung sind.

19. Overhead-Projektor nach Anspruch 1, dadurch gekennzeichnet,

daß der eine Holm des Rahmens (46) als Handgriff (47) ausgebildet ist oder einen solchen trägt, und daß vorzugsweise der dem Handgriff (47) abgewandte Holm Kontaktstifte (49) trägt.

20. Overhead-Projektor nach Anspruch 1, dadurch gekennzeichnet,

daß die Führungsschienen (53) leitfähig sind und Gegenkontakte bilden oder tragen.

21. Overhead-Projektor nach Anspruch 18, dadurch gekennzeichnet,

daß Mittel (51) zur Verstellung der gegenseitigen Lage von Lampe (6) und Reflektor (50) im Rahmen (46) vorgesehen sind.

22. Overhead-Projektor nach Anspruch 18, dadurch gekennzeichnet,

daß im Rahmen zwei Lampen (6) und zwischen diesen zwei Reflektoren (50) angeordnet sind, wobei die beiden Reflektoren (50) vorzugsweise an zwei gegenüberliegenden Seiten eines Körpers (59) ausgebildet sind und vorzugsweise der Rahmen (46) und der Körper (59) mit den beiden Reflektoren (50) einstückig hergestellt sind.

23. Overhead-Projektor nach Anspruch 18, dadurch gekennzeichnet,

daß im Rahmen (46) zwei Lampen (6) im Fenster (55) nebeneinander und - auf gegenüberliegenden Seiten des Rahmens (46) - je ein Reflektor (50) angeordnet sind.

24. Overhead-Projektor nach Anspruch 18, dadurch gekennzeichnet,

daß die Kontakte (49) am Rahmen unsymmetrisch zu dessen geometrischen Achsen (57) oder Mittelebenen angeordnet sind.

25. Overhead-Projektor nach Anspruch 16, dadurch gekennzeichnet,

daß der am Pfosten (2) mittels einer Steckverbindung oder einer Schnellkupplung (60) angebaute oder anbaubare Projektionskopf (70) mit Overhead-Projektionsobjektiv (4) gegen einen anderen mit Mikrofilmprojektor (61) oder Diaprojektor (74) austauschbar ist.

26. Overhead-Projektor nach Anspruch 16, dadurch gekennzeichnet,

daß am Projektionskopf (70) mit Overheadprojektionsobjektiv (4) zusätzlich ein Projektionskopf mit Mikrofilmprojektor (61) und/oder Diaprojektor (74) mittels einer Steckverbindung oder einer Schnellkupplung (60) anbaubar ist.

27. Overhead-Projektor nach Anspruch 25 oder 26 dadurch gekennzeichnet,

daß der Strahlengang des Diaprojektors (74) sowie des Mikrofilmprojektors (61) einerseits auf die Grundplatte (1), andererseite auf eine Wandfläche richtbar ist.

28. Overhead-Projektor nach Anspruch 27, dadurch gekennzeichnet,

daß im Strahlengang des Mikrofilmprojektors (61) und/oder des Diaprojektors (74) ein klappbarer Spiegel, ein in den Strahlengang einschiebbarer Spiegel, ein teilweise durchlässiger Spiegel oder ein den Strahlengang verzweigender, teilweise verspiegelter, prismatischer Körper angeordnet sind.

29. Overhead-Projektor nach Anspruch 27, dadurch gekennzeichnet,

daß der Mikrofilmprojektor (61) und/oder der Diaprojektor (74) mittels einer Verschwenkvorrichtung am Projektionskopf oder am Pfosten (2) angebracht ist.

30. Overhead-Projektor nach Anspruch 1, dadurch gekennzeichnet,

daß an dem Tragarm (2) der Projektionskopf (3) mittels elektrischer Kontaktstifte angesteckt und gehalten ist, und daß ein Diaprojektor (78) vorgesehen ist, dessen Gehäuse sich auf der Grundplatte (1) oder - die Grundplatte (1) überfassendauf der Aufstellfläche abstützt und mittels elektrischer Kontaktstifte (79) in Öffnungen des Tragarmes (2) eingesteckt ist, wobei sich hinter den Öffnungen für das Einstecken der Kontaktstifte (79) Kontaktklemmen befinden.

31. Overhead-Projektor nach Anspruch 30, dadurch gekennzeichnet,

daß die Grundplatte (1) über die Schreibfläche hinaus als Auflagefläche für den Diaprojektor (78) verlängert ist.

32. Overhead-Projektor nach Anspruch 30, dadurch gekennzeichnet,

daß der Tragarm (2) über seinem unteren Ende Kontaktöffnungen für die Kontaktstifte (79) des Diaprojektore (78), vor seinem oberen Ende oder am oberen Ende Kontaktöffnungen für die Kontaktstifte des Projektionskopfes (3) aufweist.

33. Overhead-Projektor nach Anspruch 30, dadurch gekennzeichnet,

daß der Abstand der Kontaktöffnungen für Diaprojektor (78) und Projektionskopf (3) unterschiedlich ist.

34. Overhead-Projektor nach Anspruch 1, dadurch gekennzeichnet,

daß der Fuß für den Pfosten (2) ein Arbeitstisch (86), insbesondere für Konferenzen ist, in dessen Tischplatte (86) mindestene eine Halterung eingelassen ist, in die die Pfosten (2) der Overhead-Projektoren (3) einsteckbar sind.

35. Overhead-Projektor nach Anspruch 34, dadurch gekennzeichnet, daß in der Halterung und in dem in diese einzusteckenden Teil des Pfostens (2) elektrische Anschlußkontakte angeordnet sind.

36. Overhead-Projektor nach Anspruch 34, dadurch gekennzeichnet,

daß in der Oberfläche der Tischplatte (86) neben den Halterungen Fresnellinsen (89) angebracht sind.

37. Overhead-Projektor nach Anspruch 34, dadurch gekennzeichnet,

daß in der Oberfläche der Tischplatte (86) neben den Halterungen Vertiefungen vorgesehen sind, in die verspiegelte Fresnellinsen (89) einlegbar sind.

38. Overhead-Projektor nach Anspruch 34, dadurch gekennzeichnet,

daß die Lichtquelle in zwei Stellungen verschwenkbar ist, eine auf die Fresnellinee (89) gerichtete Stellung und eine auf die Tischoberfläche neben der Fresnellinse gerichtete Stellung.

39. Overhead-Projektor nach Anspruch 34, dadurch gekennzeichnet, daß der Pfosten (2) zwei Objektive (4, 94) und zwei Umlenkspiegel (17, 93) trägt, die in einander entgegengesetzte Richtungen gerichtet sind.

**Claims**

1. An overhead projector consisting of a base having secured thereto a pillar for a housing which accommodates the light source and carries the objective, a mains unit and a ventilator, characterised in

that the pillar (2) houses the mains unit (7, 8) in its interior, that the ventilator for cooling the lamp and/or the mains unit is arranged inside the pillar,

and that at least a part of the pillar is formed as a cooling air conduit with at least one air inlet (10, 15) and an air outlet (14).

2. An overhead projector as claimed in Claim 1, characterised in that the mains connection cable (8) leads out of the lower region of the pillar (2).

3. An overhead projector as claimed in Claim 1, characterised in that the transformer of the mains unit (7, 8) is an electronic transformer (7).

4. An overhead projector as claimed in Claim 1, characterised in that the pillar is connected to the base by means of a plug-connection means (5).

5. An overhead projector as claimed in Claim 1 to 8, characterised in

that the base is a plate (1) serving as a recording plate and having a metallized Fresnel lens.

8. An overhead projector as claimed in Claim 1, characterised in

that additional fastening devices (24), preferably in the form of magnets, for the pillar (2) during transport, are mounted on the base.

7. An overhead projector as claimed in Claim 1, characterised in

that the pillar (2) consists of two parts which meet one another at an obtuse angle, the lower of which parts houses the mains unit (7, 8) and the upper houses the lamp (6), where the free end of the upper part of the pillar (2) carries the holder (3) for the objective.

8. An overhead projector as claimed in Claim 1, characterised in

that the pillar (2) consists of three parts (2A, 2B, 2C) which meet one another at obtuse angles, the lower of which houses the mains unit (7, 8), the central one houses the ventilator (13) and the upper one, which at its free end carries the holder (3) for the objective, houses the lamp (8).

9. An overhead projector as claimed in Claim 8, characterised in
that the air outlet (14) is arranged on the outside of the central part (2C) of the pillar.

10. An overhead projector as claimed in Claim 1, characterised in
that the part (2A) of the pillar (2) which extends essentially vertically consists of two telescopic members (2AA, 2AB) and is provided with a device which adjusts the pillar height.

11. An overhead projector as claimed in Claim 1, characterised in
that at least the input stage (30) of the mains device is in the form of an exchangeable component, preferably a plug-in component with a plug (31) which can be plugged into a socket or holder on the mains apparatus or the other components of the mains apparatus.

12. An overhead projector as claimed in Claim 11, characterised in
that the input stage (30) of the mains apparatus is accommodated in a separate housing (35), which preferably is in the form of a cylinder or a parallelepiped.

13. An overhead projector as claimed in Claim 1, characterised in
that the pillar (2) of the projector has an opening (34) for the insertion of the housing (35) for the input stage (30); and that the housing (35) for the input stage protrudes slightly from the pillar (2) of the projector.

14. An overhead projector as claimed in Claim 11, characterised in
that the side of the housing (23) for the input stage which faces away from the plug (31) is formed as a handle.

15. An overhead projector as claimed in Claim 1, characterised in
that at least one resistor (40) and preferably a safety fuse (39) is or are arranged in the housing (35) for the input stage (30), and a lamp (38) is possibly housed therein, the side (44) of the housing (35) which faces away from the plug (31) being light-transmissive.

16. An overhead projector as claimed in Claim I, 7 and 11 characterised in
that the pillar (2) carrying the projector head (3) is divided; that its parts (2A, 2B) are connected to oné another by means of a plug-type connection; and that the insertable stage of the mains unit (30) is inserted into one end face of one of said parts (2A, 2B).

17. An overhead projector as claimed in Claim 10, characterised in
that the part (2A) of the pillar (2) which houses the input stage of the mains part (30) has a window through which the input stage or the housing thereof can be seen.

18. An overhead projector as claimed in Claim 1, characterised in
that the lamp (6), together with its socket (48) and preferably a reflector (50), are accommodated in a frame (46) which can be pushed in and out through an opening (45) in the housing (3) on guide rails (53) arranged within the housing, and which carries electrical contacts (10) in the form of pins or surfaces made of a conductive material, which contacts, when the frame (46) is inserted, contact counter-contacts arranged within the housing (3) in a socket (17).

19. An overhead projector as claimed in Claim 1, characterised in
that one crosspiece of the frame (46) is shaped as or carries a handle (47); and that the crosspiece remote from the handle (47) preferably carries contact pins (49).

20. An overhead projector as claimed in Claim 1, characterised in
that the guide rails (53) are conductive and form or carry counter-contacts.

21. An overhead projector as claimed in Claim 18, characterised in
that means (51) for adjusting the mutual positions of the lamp (6) and the reflector (50) are arranged in the frame (46).

22. An overhead projector as claimed in Claim 18, characterised in
that two lamps (6) are arranged in the frame and two reflectors (50) are arranged between these lamps, where the two reflectors (50) are preferably formed on two opposite sides of a body (59) and the frame (46) and the body (59) with the two reflectors (50) are preferably produced in one piece.

23. An overhead projector as claimed in Claim 18, characterised in
that, in the frame (46), two lamps (6) are arranged in the window (55) beside one another and, on opposite sides of the frame (46), a reflector (50) is in each case arranged.

24. An overhead projector as claimed in Claim 18, characterised in
that the contacts (49) are arranged on the frame so as to be asymmetrical with respect to the geometric axes (52) or central planes thereof.

25. An overhead projector as claimed in Claim 16, characterised in
that the projection head (70) which has an overhead projection objective (4) and is or can be attached to the pillar (2) by means of a plug-in connection or a quick coupling (60), can be exchanged for another head having a microfilm projector (81), or a slide projector (74).

26. An overhead projector as claimed in Claim 16, characterised in
that a projection head having a microfilm projector (61) and/or slide projector (74) can be additionally attached to the projection head (70) which has an overhead projection objective (4), by means of a plug-in connection, or a quick coupling (60).

27. An overhead projector as claimed in Claim 25 or Claim 26, characterised in
that the light path of the slide projector (74), as also the microfilm projector (61), can be directed towards the base plate (1), on the one hand, and onto a wall surface, on the other hand.

28. An overhead projector as claimed in Claim 27, characterised in
that in the light path of the microfilm projector (61) and/or the slide projector (74) is arranged a hinged mirror, a mirror which can be inserted into the light path, a partially transmissive mirror or a partially metallized, prismatic body which splits the light path.

29. An overhead projector as claimed in Claim 27, characterised in

that the microfilm projector (61) and/or the slide projector (74) is or are secured to the projection head or the pillar (2) by means of a swivel device.

30. An overhead projector as claimed in Claim 1, characterised in

that the projection head (3) is plugged-in and secured to the carrier arm (2) by means of elcctrical contact pins; and that a slide projector (78) is provided, the housing of which is supported on the base_plate (1), or on the set-up surface so as to embrace the base plate (1), and is plugged into openings in the carrier arm (2) by means of electrical contact pins (79), contact clamps being arranged behind the openings for the plugging-in of the contact pins (79).

31. An overhead projector as claimed in Claim 30, characterised in

that the base plate (1) is extended beyond the recording surface as a support surface for the slide projector (78).

32. An overhead projector as claimed in Claim 30, characterised in

that above its lower end, the carrier arm (2) has contact openings for the contact pins (79) of the slide projector (78), and before or at its upper end, it has contact openings for the contact pins of the projection head (3).

33. An overhead projector as claimed in Claim 30, characterised in

that the spacing of the contact openings is different for the slide projector (78) and the projection head (3).

34. An overhead projector as claimed in Claim 1, characterised in

that the base for the pillar (2) is a working table (86), in particular for conferences, in whose table top (86) at least one holder is embedded, into which the pillars (2) of the overhead projectors (34) can be plugged.

35. An overhead projector as claimed in Claim 34, characterised in

that electrical connection contacts are arranged in the holder and in the part of the pillar (2) which is to be plugged into the holder.

36. An overhead projector as claimed in Claim 34, characterised in

that Fresnel lenses (89) are arranged in the surface of the table top (86) beside the holders.

37. An overhead projector as claimed in Claim 34, characterised in

that in the surface of the table top (86), recesses are arranged beside the holders, into which recesses metallized Fresnel lenses (89) can be inserted.

38. An overhead projector as claimed in Claim 34, characterised in

that the light source can be swivelled into two positions, one position directed towards the Fresnel lens (89) and one position directed towards the table surface beside the Fresnel lens.

39. An overhead projector as claimed in Claim 34, characterised in

that the pillar (2) supports two objectives (4, 94) and two deflecting mirrors (17, 93) which are directed in directions opposed to one another.

**Revendications**

1. Rétro-projecteur constitué d'un pied présentant un montant, fixé à ce pied, pour un boîtier qui contient la source lumineuse et porte l'objectif, et d'un bloc d'alimentation réseau ainsi que d'un ventilateur,
caractérisé,
en ce que le montant (2) contient à l'intérieur le bloc d'alimentation réseau (7, 8);
en ce qu'à l'intérieur du montant est disposé le ventilateur pour le refroidissement de l'ampoule et/ou du bloc alimentation;
et en ce qu'au moins une partie du montant est conçue comme canal pour l'air de refroidissement au moyen d'au moins une entrée d'air (10, 15) et une sortie d'air (14).

2. Rétro-projecteur selon la revendication 1, caractérisé,
en ce que le câble de raccordement au réseau (9) sort de la zone inférieure du montant (2).

3. Rétro-projecteur selon la revendication 1, caractérisé,
en ce que le transformateur du bloc alimentation (7, 8) est un transformateur électronique (7).

4. Rétro-projecteur selon la revendication 1, caractérisé,
en ce que le montant est reuni au pied par un dispositif de liaison enfichable (5).

5. Rétro-projecteur selon les revendications 1 à 3, caractérisé,
en ce que le pied est un plateau (1) servant de plateau pour écrire et contenant une lentille de Fresnel réflectorisée.

6. Rétro-projecteur selon la revendication 1, caractérisé,
en ce qu'au pied sont rapportés des dispositifs de fixation supplémentaires (24), principalement sous forme d'aimants pour le montant (2) pendant le transport.

7. Rétro-projecteur selon la revendication 1, caractérisé, en ce que le montant (2) est constitué de deux parties qui se transforment l'une en l'autre sous un angle obtus et dont la partie inférieure contient le bloc alimentation (7, 8) et la partie supérieure l'ampoule (6), étant précisé que l'extrémité libre de la partie supérieure du montant (2) porte le porte-objectif (3).

8. Rétro-projecteur selon la revendication 1, caractérisé,
en ce que le montant (2) est constitué de trois parties (2A, 2B, 2C) qui se transforment l'une en l'autre sous des angles obtus et dont la partie inférieure contient le bloc alimentation (7, 8), la partie médiane le ventilateur (13) et la partie supérieure, qui porte à son extrémité libre le porte-objectif (3), l'ampoule (6).

9. Rétro-projecteur selon la revendication 8, caractérisé,

en ce que la sortie d'air (14) est disposée sur la face extérieure de la partie médiane du montant (2C).

10. Rétro-projecteur selon la revendication 1, caractérisé,

en ce que la partie (2A) du montant (2) qui court sensiblement verticalement est constituée de deux parties télescopables (2AA, 2AB); et en ce qu'elle comporte un dispositif de réglage de la longueur du montant.

11. Rétro-projecteur selon la revendication 1, caractérisé,

en ce qu'au moins l'étage d'entrée (30) du bloc alimentation est conçu comme composant échangeable, de preference comme composant enfichable avec une fiche (31) que l'on peut enficher dans une monture ou une douille sur le bloc alimentation ou les autres parties du bloc alimentation.

12. Rétro-projecteur selon la revendication 11, caractérisé,

en ce que l'étage d'entrée (30) du bloc alimentation est logé dans un boitier special (35), étant précisé que de préférence le boîtier (35) de l'étage d'entree (30) du bloc alimentation présente la forme d'un cylindre ou d'un parallèlépipède.

13. Rétro-projecteur selon la revendication 1, caractérisé, en ce que le montant (2) du projecteur présente une ouverture (34) pour l'enfichage du boîtier (35) de l'étage d'entrée (30), et en ce que le boîtier (35) de l'étage d'entrée dépasse un peu hors du montant (2) du projecteur.

14. Rétro-projecteur selon la revendication 11, caractérisé,

en ce que le côté du boîtier (35) de l'étage d'entrée opposé à la fiche (35) est conçu comme poignée.

15. Rétro-projecteur selon la revendication 1, caractérisé

en ce qu'au moins une resistance (40) et de préférence aussi un fusible (39) sont disposés dans le boîtier (35) de l'étage d'entrée (30); et en ce qu'eventuellement ce boîtier contient une ampoule (38), étant précisé que le côté (44) du boîtier (35) opposé à la fiche (31) est transparent.

16. Rétro-projecteur selon les revendications 1, 7 et 11

caractérisé,

en ce que le montant (2) qui porte la tête de projection (3) est en plusieurs parties;

en ce que ses parties (2A, 2B) sont réunies l'une à l'autre par une liaison enfichable;

et en ce que dans l'une des faces frontales de l'une de ces parties est enfiche l'étage enfichable du bloc alimentation réseau (30).

17. Rétro-projecteur selon la revendication 10 caractérisé,

en ce que la partie (2A) du montant (2) qui contient l'étage d'entrée du bloc alimentation réseau (30) presente une fenêtre à travers laquelle on peut voir l'étage d'entrée ou son boîtier.

18. Rétro-projecteur selon la revendication 1, caractérisé,

en ce que l'ampoule (6) avec sa monture (48) et de préférence un réflecteur (50) est logée dans un châssis (46) qui peut coulisser, pour entrer et sortir par une ouverture (45) du boîtier (3), dans des rails de guidage (53) disposés à l'intérieur du boîtier et qui porte des contacts électriques (10), sous forme de broches ou de surfaces en matériau conducteur, qui, lorsque le châssis (46) est enfilé, sont en contact, dans une douille (17), avec des contre-contacts disposés à l'intérieur du boîtier (3).

19. Rétro-projecteur selon la revendication 1, caractérisé,

en ce que l'un des longerons du châssis (46) est conçu comme poignée (47) ou porte une poignée; et en ce que de préférence le longeron opposé à la poignée (47) porte des broches de contact (49).

20. Rétro-projecteur selon la revendication 1, caractérisé

en ce que les rails de guidage (53) sont conducteurs et forment ou portent les contre-contacts.

21. Rétro-projecteur selon la revendication 18, caractérisé,

en ce que dans le châssis (6) sont prevus des moyens (51) de reglage de la position réciproque de l'ampoule (6) et du réflecteur (50).

22. Rétro-projecteur selon la revendication 18, caractérisé,

en ce que dans le châssis sont disposés deux ampoules (6) et, entre ces ampoules deux réflecteurs (50), étant précisé que les deux réflecteurs (50) sont de préférence prévus sur deux côtés opposés d'un élément massif (59) et que de préférence le châssis (46) et l'élément massif (59) sont fabriqués d'une pièce avec les deux réflecteurs (50).

23. Rétro-projecteur selon la revendication 18, caractérisé,

en ce que dans le châssis (46) sont disposés deux ampoules (6), l'une à côté de l'autre dans la fenêtre (55), et chaque fois un réflecteur (55) - sur les côtés opposés du châssis (46).

24. Rétro-projecteur selon la revendication 18, caractérisé,

en ce que les contacts (49) sont disposés sur le châssis de façon non symétrique par rapport à leurs axes géométriques (57) ou a leurs plans médians.

25. Rétro-projecteur selon la revendication 16, caractérisé,

en ce que la tête de projection (70) contenant l'objectif de rétroprojecteur (4) est montée, ou pouvant être montée, sur le montant (2) au moyen d'une liaison enfichable ou d'un accouplement rapidé (60) peut être échangée contre une autre tête contenant un projecteur de mircrofilm (61) ou un projecteur de diapositives (74).

26. Rétro-projecteur selon la revendication 16, caractérisé,

en ce que sur la tête de projection (70) contenant l'objéctif de rétroprojection (4), on peut monter en outre, au moyen d'une liaison enfichable ou d'un accouplement rapide (60), une tête de projection contenant un projecteur de microfilm (61) et/ou un projecteur de diapositives (74).

27. Rétro-projecteur selon la revendication 25 ou 26, caractérisé,

en ce que l'on peut diriger le chemin des rayons du projecteur de diapositives (74) ainsi que du projecteur de microfilm (61) d'une part sur le plateau (1) et d'autre part sur la surface d'un mur.

28. Rétro-projecteur selon la revendication 27, caractérisé,

en ce que sur le chemin des rayons du projecteur de microfilm (61) et/ou du projecteur de diapositives (74) sont disposés un miroir rabattable, un miroir que l'on peut faire coulisser dans le chemin des rayons, un miroir partiellement transparent où un corps prismatique, partiellement réfléctorisé, qui fait bifurquer le chemin des rayons.

29. Rétro-projecteur selon la revendication 27, caractérisé,

en ce que le projecteur de microfilm (61) et/ou le projecteur de diapositives (74) sont rapportés sur la tête de projection ou sur le montant (2) au moyen d un dispositif pivotant.

30. Rétro-projecteur selon la revendication 1, caractérisé,

en ce que la tête de projection (3) est enfichée et maintenue sur le montant (2) au moyen de broches de contacts électriques; et en ce qu'il est prévu un projecteur de diapositives (78) dont le boîtier s'appuie sur le plateau de base (1) ou sur la surface de montage qui vient par-dessus le plateau (1) et s'enfiche dans des ouvertures du montant (2) au moyen de broches électriques de contact (79), étant précisé que derrière les ouvertures d'enfichage des broches de contact (79) se trouvent des bornes de contact.

31. Rétro-projecteur selon la revendication 30, caractérisé

en ce que le plateau de base (1) se prolonge au-delà de la surface prévue pour écrire, sous forme de surface d'appui pour le projecteur de diapositives (78).

32. Rétro-projecteur selon la revendication 30, caractérisé,

en ce que le montant (2) présente, au-dessus de son extrémité inférieure, des ouvertures de contact pour les broches de contact (79) du projecteur de diapositives (78) et, avant son extrémité supérieure ou à son extrémité supérieure, les ouvertures de contact pour les broches de contact de la tête de projection (3).

33. Rétro-projecteur selon la revendication 30 caractérisé,

en ce que l'écartement des ouvertures de contact est différent pour le projecteur de diapositives (78) et pour la tête de projection (3).

34. Rétro-projecteur selon la revendication 1, caractérisé,

en ce que le pied du montant (2) est une table de travail (86), en particulier pour des conférences, dans le plateau (86) de laquelle est inséré au moins un support dans lequel on peut enficher les montants (2) des rétro-projecteurs (3).

35. Rétro-projecteur selon la revendication 34 caractérisé,

en ce que dans le support et dans la partie du montant (2) à enficher dans ce support sont disposés des contacts de raccordement électrique.

36. Rétro-projecteur selon la revendication 34. caractérisé,

en ce que dans la surface du plateau (86), à côté des supports, sont placées des lentilles de Fresnel (89).

37. Rétro-projecteur selon la revendication 34. caractérisé,

en ce que dans la surface du plateau (86), à côté des supports, sont prévus des logements dans lesquels on peut loger des lentilles de Fresnel réflectorisées (89).

38. Rétro-projecteur selon la revendication 34. caractérisé,

en ce que la source lumineuse peut pivoter selon deux positions, une position dirigée sur la lentille de Fresnel (89) et une position dirigee sur la surface du plateau, à côté de la lentille de Fresnel.

39. Rétro-projecteur selon la revendication 34. caractérisé,

en ce que le montant (2) porte deux objectifs (4, 94) et deux miroirs de renvoi (17, 93) dirigés dans des directions opposées l'une à l'autre.

# FIG.1

FIG.3

FIG.2

FIG.4

FIG.5

2B  2C  4  3

2A

20  21

23

22

26  25

25  2A  25

3

4

21

20

20

FIG.7

20  21

26  23  24  26

FIG.6

FIG.8

FIG.9

FIG.10

FIG.12

FIG.11

FIG.13

FIG.14

FIG.15

FIG.16

FIG.17

FIG.18

FIG.19

FIG. 20

FIG. 21

FIG. 22

FIG. 23

FIG. 24

# FIG. 25

## FIG. 26

**FIG. 27**

**FIG. 28**

FIG.29

17
3
2

87        86        87

97

88

A        B        C        D

95        90        89        E        F        G

FIG.30

96

FIG. 31